# EUROPEAN PATENT APPLICATION

(11) **EP 4 737 697 A1**
(43) Date of publication of application: **06.05.2026**
(21) Application number: 25207312.7
(22) Date of filing: 07.10.2025
(51) Int. Cl.: F02C 3/34, F01D 25/30, F02C 7/047, F02C 7/08

(54) **INTEGRATION SYSTEMS FOR GAS TURBINE ENGINES AND METHODS OF USE**

(30) Priority: 01.11.2024 IN 202411083755
(71) Applicant: GE Vernova Technology GmbH, 5400 Baden (CH)
(72) Inventor: SAMMAK, Majed, Dubai (AE); HAYES, Paul Allen, Manchester, SK8 3TD (GB); GUNASEKARAN, Ravikumar, 560066 Bengaluru (IN); VENKATA, Sandeep Kumar Reddy, 560066 Bengaluru (IN); KRISHNAN, Jeevankumar, 560066 Bengaluru (IN)
(74) Representative: Freigutpartners IP Law Firm

(57) **Abstract**

An integration system for use with a gas turbine engine includes an exhaust gas recirculation (EGR) system in flow communication with a gas turbine section of the gas turbine engine. The EGR system includes an EGR conduit fluidly coupled to an exhaust line of the gas turbine engine and fluidly coupled to an EGR manifold upstream from an inlet of a compressor section of the gas turbine engine. The EGR conduit is oriented to provide a portion of exhaust gases discharged from the gas turbine section to the EGR manifold. Additionally, the EGR system also includes a flow restriction component in flow communication with the exhaust line of the gas turbine engine. The flow restriction component is downstream from the EGR conduit of the EGR system. The flow restriction component facilitates increasing a pressure of the exhaust gases discharged from the gas turbine section.

## Description

### CROSS-REFERENCE TO RELATED APPLICATION

This application is a continuation-in-part of PCT patent application Ser. No. PCT/US 23/30311, filed August 16, 2023, the entirety of which is herein incorporated by reference.

### BACKGROUND

The field of the disclosure relates generally to turbine engine assemblies and more particularly, to methods and systems for heating compressor inlet air to facilitate improved gas turbine engine efficiency.

Gas turbines are widely used in a variety of commercial operations, such as power generation operations. Known gas turbines generally include a compressor, one or more combustors, and a turbine. Conventionally, the compressor compresses a working fluid, *e.g*., air, and discharges the compressed working fluid to the combustors. Fuel is injected into the flow of compressed working fluid and the mixture is ignited to produce combustion gases having a relatively high temperature, pressure, and velocity. The combustion gases exit the combustors and flow to the turbine where they expand to produce work which may be converted into electrical and/or mechanical power.

Working fluid entering an inlet, *e.g.,* an inlet transition duct or a filter housing, of a compressor may be heated to prevent icing when operating in lower temperature environments, for example. Inlet working fluid may also be heated to improve the part or partial load efficiency of the gas turbine. In some gas turbines, compressed working fluid may be extracted from an extraction location near an outlet of the compressor and recirculated to heat the inlet working fluid using a system that is conventionally referred to as an inlet bleed heat system. However, known inlet bleed heat systems reduce the overall operating efficiency of the associated gas turbine engine as at least some of the compressed working fluid that would otherwise be routed to doing work in the turbine is extracted and recirculated to the inlet.

Accordingly, a need exists for systems and methods that more efficiently heat inlet working fluid prior to entering the compressor inlet in a manner that facilitates reducing the overall losses in turbine efficiency.

### SUMMARY

In one aspect, an integration system for use with a gas turbine engine is provided. The integration system includes an exhaust gas recirculation (EGR) system in flow communication with a gas turbine section of the gas turbine engine. The EGR system includes an EGR conduit fluidly coupled to an exhaust line of the gas turbine engine and fluidly coupled to an EGR manifold upstream from an inlet of a compressor section of the gas turbine engine. The EGR conduit is oriented to provide a portion of exhaust gases discharged from the gas turbine section to the EGR manifold. Additionally, the EGR system also includes a flow restriction component in flow communication with the exhaust line of the gas turbine engine. The flow restriction component is downstream from the EGR conduit of the EGR system. The flow restriction component facilitates increasing a pressure of the exhaust gases discharged from the gas turbine section.

In another aspect, a power generation system is provided. The power generation system includes a gas turbine engine including a compressor section for compressing a working fluid, and a combustor section downstream from and in flow communication with the compressor section. The gas turbine engine also includes a gas turbine section downstream from and in flow communication with the combustor section. The power generation system also includes an integration system in flow communication with the gas turbine engine. The integration system includes an exhaust gas recirculation (EGR) system in flow communication with the gas turbine section of the gas turbine engine. The EGR system includes an EGR conduit fluidly coupled to an exhaust line of the gas turbine engine and fluidly coupled to an EGR manifold upstream from an inlet of the compressor section of the gas turbine engine. The EGR conduit is also oriented to provide a portion of exhaust gases discharged from the gas turbine section to the EGR manifold. The integration system also includes a flow restriction component in flow communication with the exhaust line of the gas turbine engine, where the flow restriction component is downstream from the EGR conduit of the EGR system. Additionally, the flow restriction component facilitates increasing a pressure of the exhaust gases discharged from the gas turbine section.

In yet another aspect, a method is provided. The method includes adjusting a pressure of exhaust gases generated by a gas turbine section of a gas turbine engine using a flow restriction component, where the flow restriction component is in flow communication with an exhaust line of the gas turbine engine. The method also includes providing the exhaust gases generated by the gas turbine section of the gas turbine engine to an exhaust gas recirculation (EGR) manifold of an EGR system, via a EGR conduit. The EGR conduit is fluidly coupled to the EGR manifold and the exhaust line of the gas turbine engine, upstream from the flow restriction component.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of an exemplary power generation system including a gas turbine engine and an integrated efficiency (IE) system.
FIG. 2 is a schematic illustration of an exemplary integrated efficiency system including an inlet bleed heat (IBH) system that may be used with the power generation system shown in FIG. 1, for example.
FIG. 3 is a schematic illustration of another exemplary integrated efficiency system that may be used with the power generation system shown in FIG. 1, for example, and including the IBH system and an exhaust gas recirculation (EGR) system.
FIG. 4 is a block diagram of an exemplary control system that may be used with the IE system shown in FIGS. 1-3.
FIG. 5 is a first perspective view of an exemplary filter that may be used with the IE system shown in FIGS. 1-3, for example.
FIG. 6 is a second perspective view of the filter shown in FIG. 5.
FIG. 7 is a cross-sectional view of the filter shown in FIG. 5.
FIG. 8 is a perspective view of an exemplary IBH manifold that may be used with the IE system shown in FIGS. 1-3.
FIG. 9 is a detailed view of the IBH manifold shown in FIG. 8.
FIG. 10 is a front perspective view of an exemplary EGR manifold that may be used with the IE system shown in FIGS. 1-3.
FIG. 11 is a rear perspective view of the exemplary EGR manifold shown in FIG. 10.
FIG. 12 is a rear view of the exemplary EGR manifold shown in FIG. 10.
FIG. 13 is a process flow diagram of an exemplary method of controlling the IE system shown in FIGS. 1-3, for example.
FIGS. 14-21 are schematic illustrations of additional exemplary integrated efficiency systems that may be used with the power generation system shown in FIG. 1, for example, and including the IBH system and an exhaust gas recirculation (EGR) system.
FIG. 22 is a process flow diagram of an exemplary method of controlling the IE system shown in FIGS. 14-21, for example.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings. The singular forms "a," "an," and "the" include plural references unless the context clearly dictates otherwise. "Optional" or "optionally" means that the subsequently described event or circumstance may or may not occur, and that the description includes instances where the event occurs and instances where it does not. Furthermore, references to "one embodiment" are not intended to be interpreted as excluding the existence of additional embodiments that also incorporate the recited features. Moreover, unless explicitly stated to the contrary, embodiments "including" or "having" an element or a plurality of elements having a particular property may include additional such elements not having that property.

As used herein, the term "real-time" refers to either the time of occurrence of the associated events, the time of measurement and collection of predetermined data, the time to process the data, or the time of a system response to the events and the environment. In the embodiments described herein, these activities and events occur substantially instantaneously.

In the exemplary embodiments described herein, a power generation system includes an integrated efficiency (IE) system used with a gas turbine engine. In some embodiments, the IE system includes an inlet bleed heat (IBH) system and an exhaust gas recirculation (EGR) system. In at least some of the embodiments described herein, the IE system returns working fluid and/or exhaust gases to one or more locations upstream from a compressor section, e.g., such as an inlet transition duct that channels working fluid into the compressor. In the exemplary embodiment, the IBH system draws working fluid from the extraction location near the compressor outlet and returns the compressed working fluid to a location upstream from the compressor inlet and the EGR system draws exhaust gases exiting a turbine outlet and returns the exhaust gases to a location upstream from the compressor inlet. In the embodiments described herein, the IE system heats the inlet working fluid prior to the fluid entering the compressor inlet, thus improving the part load efficiency of a gas turbine, or the efficiency of the turbine at operating conditions other than its full load design point, while also preventing icing and/or compressor surge. The power generation system may include a gas turbine simple cycle, cogeneration, or a combined cycle.

In some embodiments, the IE system includes a controller that adjusts a flow parameter, such as a mass flow rate, a relative mass flow rate, and/or an amount of fluid, *e.g.,* exhaust gas or compressed air, respectively, of the EGR and the IBH systems enabling a desired operating condition of the gas turbine engine to be achieved. In some embodiments, the controller is communicatively coupled to one or more sensors, and may selectively adjust the flow parameter in real-time or periodically, based on received sensor data and based on the targeted operating conditions. In some embodiments, the controller may determine one or more parameters, e.g., temperature, and selectively adjust the flow parameter based on the determined parameter. As the EGR and the IBH systems may be used in combination, the IBH system may be more compact, having a smaller physical footprint, and draw a smaller amount of compressed fluid, thus facilitating improving the efficiency of the power generation system 100. In some embodiments, the IBH system may be used to only prevent compressor surge, supplement the EGR system, and/or act as a backup as heating of the inlet air is achieved primarily by the EGR system. In some embodiments, the controller may selectively turn on/off the IBH system to prevent compressor surge, while the EGR is operated continuously to heat the inlet air.

In some embodiments, the IE system prevents icing by heating one or more components of the gas turbine system and/or by heating inlet working fluid prior to the heated working fluid entering the compressor. The IE system may return compressed working fluid by the IBH system and/or return exhaust gases by the EGR system to heat the inlet transition duct and/or the inlet working fluid upstream from the compressor. In particular, the exhaust gases and/or the bleed compressed air may have a higher temperature than the temperature of the drawn inlet air.

In some embodiments, the IE system facilitates reducing emissions from the gas turbine engine. More specifically, in some embodiments, the EGR system draws exhaust air from the turbine outlet to be returned to a location upstream from the compressor inlet, thus controlling the release of emissions of the gas turbine engine.

In some embodiments, the IE system also facilitates reducing the likelihood of compressor surge. Compressor surge may refer to operating conditions wherein airflow within the compressor becomes unstable and/or the airflow is disrupted, causing unwanted vibration and noise. In some embodiments, the IE system includes a IBH system which draws compressed working fluid exiting the compressor extraction location and returns the compressed working fluid upstream from the compressor inlet. Because the compressed working fluid is drawn from the compressor extraction location, a front-end load on the compressor is reduced and as such the likelihood of compressor surge is substantially reduced.

In some embodiments, the IE system improves part load efficiency, an efficiency of the compressor and/or an efficiency of the turbine, by preheating inlet working fluid. Heating of the working fluid enables the gas turbine to remain in a premix operating condition, wherein fuel is mixed with compressed working fluid prior to combustion, over a larger load range, while maintaining higher firing temperatures, compressor and combustor stability, and emissions compliance and while reducing the current IBH extraction flow requirements. Reduction in IBH extraction facilitates reducing fuel consumption for the same work/power output of the gas turbine engine, thus improving part load efficiency. Furthermore, inlet heating increases the compressor discharge temperature and the gas turbine exhaust temperature and thus increases the efficiency of the bottoming cycle, and as follows, the combined cycle output and efficiency.

In some embodiments, the IE system facilitates reducing acoustic noise levels and thus enables plant acoustic requirements to be satisfied. In some embodiments, the IE system reduces an amount of noise by a silencer and/or acoustic nozzles of a IBH manifold.

In some embodiments, the IE system includes one or more sensors that detect one or more operating conditions of the gas turbine engine, the IBH system, and/or the EGR system. The sensors may include, but are not limited to only including, temperature sensors, pressure sensors, flow sensors, and/or emission sensors. In some embodiments, the IE system may use data obtained from the sensors to detect a surge event, a potential surge event, and/or a surge event in its early stages. For example, sensors may detect in airflow and/or pressure at and/or near the compressor, *e.g*., the compressor outlet, wherein the detected changes may be indicative of a surge event. In some embodiments, the controller may determine a surge condition using any suitable method, *e.g*., using a compressor map including a surge line. In some embodiments, the IE system may use the data provided by such sensors to detect an icing event. For example, in some embodiments, one or more sensors may be positioned to detect inlet temperature, working fluid temperature, and/or ambient temperature, humidity or relative humidity *e.g*., outside of the gas turbine engine, and/or any other temperature(s) reading(s) upstream from the compressor inlet. In some embodiments, the IE system may utilize data obtained from the sensors to detect the emissions from the power generation system.

In some embodiments, the IE system may determine, *e.g*., using a controller, one or more operating conditions of the gas turbine engine, the IBH system, and/or the EGR system, *e.g*., without utilizing a sensor for direct measurement. For example, the controller may calculate or look-up one or more values for pressure, temperature, flow rate and/or emissions at one or more locations of the IE system and/or the gas turbine engine.

In the exemplary embodiment, the controller is coupled to the IBH system and to the EGR system enabling selective control of the operation, or relative operation, of the IBH system and/or the EGR system. The controller may also be coupled to the one or more sensors. In some embodiments, the controller may selectively control a flow parameter, such as a flow rate of a working fluid (*e.g.,* by controlling the control valve positions) channeled through IBH system and/or the flow parameter of exhaust gases channeled through the EGR system to enable desired operating conditions to be achieved while improving the operating efficiency. In some embodiments, the controller may use data received from the sensors, and/or data determined by the controller, to selectively adjust one or more parameters of the IE system, *e.g.,* a parameter of the IBH system and/or a parameter of the EGR system. For example, in some embodiments, the controller may predict an amount of time until a probable surge event, an icing event, and/or until an emission level exceeds a predefined operating threshold.

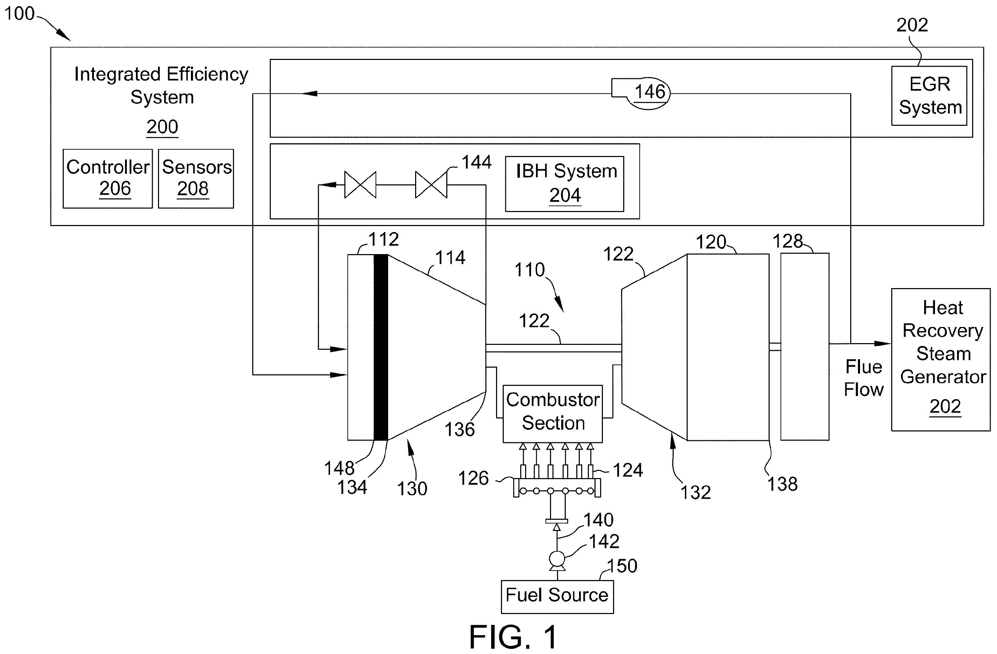

Referring now to the drawings, FIG. 1 is a schematic of an exemplary power generation or mechanical drive system 100 including a turbine engine 110 and an integrated efficiency (IE) system 200 including an exhaust gas recovery (EGR) system 202 and an inlet bleed heat system (IBH) system 204. While the exemplary embodiment is illustrated in association with a gas turbine engine, the present invention is not limited to any particular engine, and one of ordinary skill in the art will appreciate that the current invention may be used in connection with other turbine engines. As used herein, the terms "turbine," "turbine assembly," and "turbine engine" shall be used interchangeably.

The IE system 200 may include a controller 206 that is coupled to the EGR system 202 and the IBH system 204. The controller 206 may control a flow of working fluid traveling through the IBH system 204 and/or a flow of exhaust gases traveling through the EGR system 202, as will be described in detail herein. The IE system 200 may further include at least one sensor 208 that detects one or more parameters or operating conditions of the IE system 200 and/or the gas turbine engine 110. The controller 206 may be incorporated with a controller associated with the gas turbine engine 110. Additionally, and/or alternatively the controller 206 may be separate from a controller associated with the gas turbine engine 110.

In the exemplary embodiment, turbine engine 110 includes an intake section 112, a compressor section 114 coupled downstream from intake section 112, a combustor section 116 coupled downstream from compressor section 114, a turbine section 118 coupled downstream from combustor section 116, and an exhaust section 120. Turbine section 118 is coupled to compressor section 114 via a rotor shaft 122. The combustor section 116 may include a plurality of combustors (not shown). Combustor section 116 is coupled in flow communication with compressor section 114.

A fuel injector 124 is coupled to the combustor section 116. In some embodiments, the turbine engine 110 includes a manifold or manifolds 126 including a plurality of the fuel injectors 124. Turbine section 118 is coupled to compressor section 114 and to a load 128 such as, but not limited to, an electrical generator and/or a mechanical drive application. In the exemplary embodiment, each of the compressor sections 114 and turbine section 118 includes at least one rotor disk assembly 130 that is coupled to a rotor shaft 122 to form a rotor assembly 132.

During operation, intake section 112 channels air towards a compressor inlet 134 of the compressor section 114 wherein the air is compressed to a higher pressure and temperature prior to the pressurized air being mixed with fuel and the resulting mixture discharged towards combustor section 116. More specifically, the compressed air is mixed with a fuel mixture and ignited to generate combustion gases that are channeled towards turbine section 118. Turbine section 118 converts thermal energy from the gas stream to mechanical rotational energy, as the combustion gases impart rotational energy to turbine section 118 and to rotor assembly 132.

In some embodiments, the fuel source 150 may be a variable fuel source that delivers various types and/or mixtures of fuel. Fuel source 150 may store and/or supply natural gas, liquified petroleum gases (LPG) blends, methane, hydrogen, hydrogen/natural gas blends, fuel oils, coke oven gas, refinery gases and any suitable gas fuel or gas fuel mixture, for example. The fuel supplied and/or stored by the fuel source, may be variably selected based on the operating conditions and/or availability of one or more fuel sources.

The turbine engine 110 may include one or more conduits, pipes, ducts, and/or tubes, generally referred to herein as conduits 140, used to transfer fuel between components. Fuel may be motivated to move through conduits 140 from upstream components to downstream components using gravitational forces. Alternatively, and/or additionally, fuel may be pressurized through conduits 140 using compressors or pumps or blowers 142, for example.

In some embodiments, the gas turbine engine 110 includes a variable inlet guide vane assembly 148 positioned upstream from the compressor inlet 134. In such embodiments, the controller 206 may selectively adjust an angle of one or more vanes of the variable inlet guide vane assembly 148 to adjust a mass flow rate and/or to vary an amount of working fluid entering the compressor section 114. For example, the gas turbine engine 110 may adjust inlet guide vane assembly 148 to facilitate reducing an amount of working fluid delivered to the compressor section 114 such that a desired ratio of working fluid to fuel ratio is maintained, *e.g*., during parts loading operating conditions. In some embodiments, the controller 206 may selectively adjust both the inlet guide vane assembly 148 and the temperature of the working fluid delivered to the compressor section 114, by selectively controlling the IBH and EGR systems, to control an amount of working fluid delivered to the compressor section 114.

As mentioned above, the IE system 200 controls the temperature of working fluid upstream from the compressor section 114. An increase in the inlet working temperature decreases the density of the working fluid and thereby decreases the mass of working fluid entering the compressor section 114. The controller 206 may determine an amount of heat, *e.g*., thermal energy, which will need to be supplied to upstream working fluid, to ensure correct heating of the working fluid, and the necessary decrease in the density of the working fluid, in order to adjust the amount of working fluid delivered to the compressor section 114. The controller 206 may adjust both the variable inlet guide vane assembly 148 and the IE system 200 to control a mass flow rate of working fluid entering the compressor section 114. For example, the controller 206 may position the variable inlet guide vane assembly 148 in a fully opened, or a maximum opened position, and the controller may utilize the IE system 200 to adjust the amount of working fluid delivered to the compressor section 114. For example, the controller 206 may increase the amount of exhaust gas delivered upstream from the compressor inlet 136 using the EGR system 202, heating the inlet working fluid and decreasing the density of the working fluid, and therefore decreasing an amount of working fluid that is delivered to the compressor section 114.

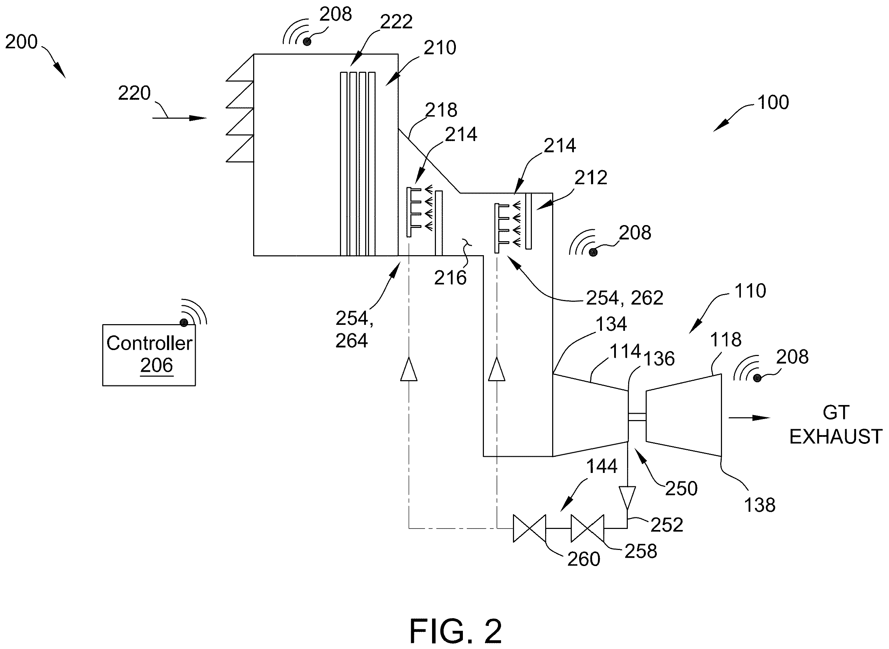

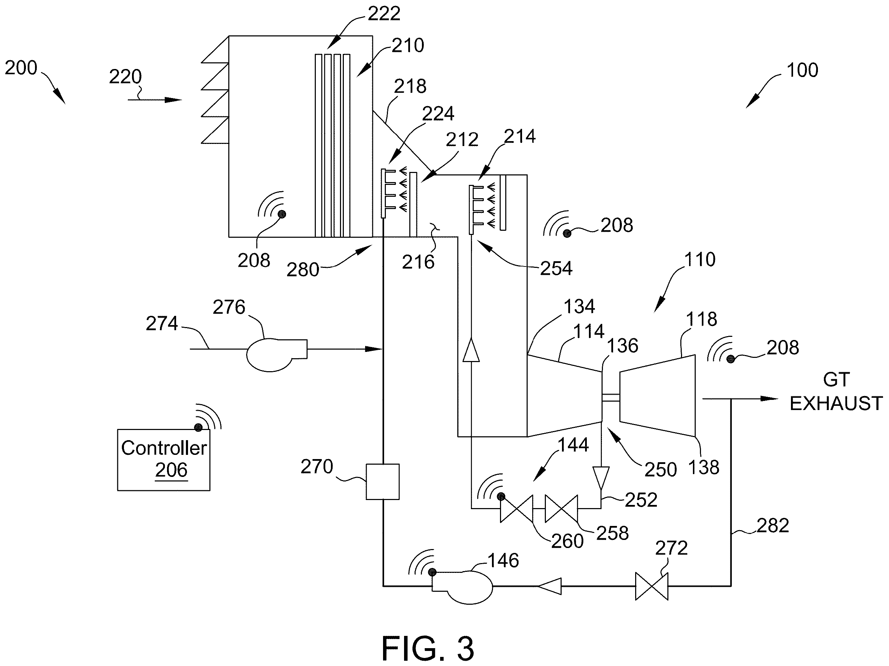

In the exemplary embodiment, the IBH system 204 draws compressed working fluid downstream from the compressor outlet 136 and reintroduces the compressed fluid at a location upstream from the compressor inlet 134. The drawn compressed working fluid may be motivated to travel through the IBH system 204 via a pressure differential of the drawn working fluid. For example, the working fluid of the IBH system 204, extracted from the compressor section 114, may have a higher pressure as compared to working fluid and/or air that is upstream from the compressor inlet 134. In some alternative embodiments, the drawn compressed working fluid may be motivated via flow motive devices. In some embodiments, the IBH system 204 includes one or more flow control devices 144, *e.g.,* valves, which control the flow of compressed working fluid. The IBH system 204 may also include conduits that direct compressed air from the compressor outlet 136 to a location upstream from the compressor inlet 134. The IBH system 204 is shown and described in more detail with respect to FIGS. 2 and 3.

In the exemplary embodiment, the EGR system 202 draws exhaust gases exiting the turbine section 118 and reintroduces the exhaust gases upstream from the compressor inlet 134. In some embodiments, the EGR system 202 may include one or more flow motive devices 146 for motivating the flow of exhaust gas through the EGR system 202 from the combustor outlet to the upstream reintroduction location. In some embodiments, the pressure of the drawn exhaust gas may be less than the pressure of working fluid upstream from the compressor inlet 134. In some embodiments, the temperature of the drawn exhaust gas has a higher temperature than that of the working fluid, and/or of that of the air upstream from the compressor inlet 134. The EGR system 202 may include one or more conduits that direct exhaust flow from the combustor outlet towards a location upstream from the compressor inlet 134. The EGR system 202 is shown and described in greater detail with respect to FIGS. 2 and 3.

In the exemplary embodiment, the IE system 200 may be operated in any of a plurality of operation modes, enabling the IE system 200 to achieve one or more desired operating conditions including, for example, and without limitation, anti-icing, surge protection, and/or emission compliance, while improving the efficiency of the power generation system 100 or the gas turbine engine 110. The controller 206 may variably select an operation mode based on a targeted operating condition. At least one operating mode is an EGR mode in which the controller 206 causes the IE system 200 to utilize the EGR system 202 and during which time, the IBH system 204 is deenergized and/or placed in a standby mode. At least one other operating mode includes an EGR dominate mode, in which the IE system 200 supplies a higher amount or a higher mass flow of exhaust gases through the EGR system 202 as compared to the amount or mass flow of compressed working fluid drawn at an extraction location downstream from the compressor outlet 136 through the IBH system 204.

As used herein, the terms "processor" and "computer" and related terms, e.g., "processing device," "computing device," and "controller" are not limited to just those integrated circuits referred to in the art as a computer, but instead refer broadly to a microcontroller, a microcomputer, a programmable logic controller (PLC), an application specific integrated circuit, and/or other programmable circuits, and such terms are used interchangeably herein. In the embodiments described herein, memory may include, but is not limited to, a computer-readable medium, such as a random-access memory (RAM), and a computer-readable non-volatile medium, such as flash memory. Alternatively, a floppy disk, a compact disc-read only memory (CD-ROM), a magneto-optical disk (MOD), and/or a digital versatile disc (DVD) may also be used. Also, in the embodiments described herein, additional input channels may be, but are not limited to only being, computer peripherals associated with an operator interface such as a mouse and a keyboard. Alternatively, other computer peripherals may also be used such as, but not limited to, a scanner or a touchscreen. Furthermore, in the embodiments described herein, additional output channels may include, but are not limited to only being, an operator interface monitor.

FIG. 2 is a schematic view of an exemplary embodiment of the IBH system 204 that may be used with the IE system 200, shown in FIG. 1. FIG. 3 is a schematic view of the IE system 200 and includes both the IBH system 204 and the EGR system 202. In the exemplary embodiment, the IE system 200 may include a filter 210, a silencer 212, and/or an IBH manifold 214. The filter 210, the silencer 212, and/or the IBH manifold 214 may be within an inner passage 216 defined by an inlet transition duct 218. The inlet transition duct 218 may be coupled in flow communication with the compressor inlet 134, such that the inlet transition duct 218 directs inlet working fluid, air, and/or exhaust gases, *etc.,* towards the compressor inlet 134. In some embodiments, the inlet transition duct 218 may be incorporated with at least a portion of the intake section 112 that draws inlet fluid 220 into the compressor section 114. The duct 218 may have any suitable shape or size that enables IE system to function as described herein. In some embodiments, the IBH manifold 214 may extend across, *e.g*., completely across, the inner passage 216 defined by the duct 218. The inlet transition duct 218 may include a transaction duct including a duct which couples the inlet filter house ducting to inlet compressor, *e.g*., the transition duct may couple two duct portions together that each have different cross-sectional area. The filter 210 may include one or more filter elements 222. The filter 210, the silencer 212, and/or the IBH manifold 214 may be upstream from the compressor inlet 134. In some embodiments, the silencer 212 is downstream from the filter 210 and upstream from the compressor inlet 134. The IBH manifold 214 distributes fluid used with the IBH system 204. In some embodiments, the IE system 200 include a EGR manifold 224 for distributing exhaust gas upstream from the compressor inlet 134.

The sensors 208 of the IE system 200 may include, but are not limited to only including, for example, a temperature sensor, a pressure sensor, a flow sensor, relative humidity sensor, and/or an emission sensor. The sensors 208 may be positioned at various suitable locations within or in proximity to the IE system 200 and/or the power generation system 100. In some embodiments, the IE system 200 may use data supplied from at least one of the sensors 208, or determined by the controller 206, to detect a surge event, a potential surge event, and/or a surge event in its early stages. For example, IE system 200 may detect a surge event by detecting, or determined, changes in airflow and/or pressure at and/or near the compressor and/or near the compressor outlet 136. In some embodiments, the controller 206 may determine a surge condition using any suitable method, *e.g*., using a compressor map including a surge line. In some embodiments, the IE system 200 may use the one or more sensors 208 to detect a current emission level or to determine emission performance or compliance.

In some embodiments, at least one sensor 208 may be positioned to detect ambient temperature or humidity, *e.g*., a temperature outside of the gas turbine engine 110, and/or a temperature upstream from the compressor inlet 134. In some embodiments, the sensors 208 and/or the controller 206 may detect an icing condition. For example, an icing condition may be sensed based on a temperature sensor 208 detecting a predefined temperature upstream from the compressor inlet 134 and the controller 206 may receive the temperature data for processing. In such an example, the controller 206 may compare the temperature data to one or more temperature thresholds to determine if an icing event will occur or is occurring.

In further reference to FIGS. 2 and 3, the IBH system 204 draws compressed working fluid from an extraction location that is near the compressor outlet 136 or downstream from the compressor outlet 136 and returns the drawn compressed fluid to a location upstream from the compressor inlet 134. The IBH system 204 includes a location 250 where the compressed working fluid is extracted from the gas turbine engine 110. In some embodiments, the extraction location 250 is downstream from the compressor outlet 136 and is upstream from the combustor section 116. In some embodiments, the extraction location 250 is at, or is in proximity to, the compressor outlet 136. The drawn working fluid extracted from the compressor section 114 may have a pressure that is higher than inlet fluid 220 upstream from the compressor inlet 134. In some embodiments, the drawn working fluid is extracted from any suitable extraction location near or directly from the compressor section 114.

The IBH system 204 includes conduits 252, *e.g.,* ducts, pipes, *etc.,* used to transfer the extracted compressed working fluid to a return location 254. The IBH system 204 may include one or more flow control devices 144 to provide enhanced control of the flow of working fluid through the IBH system 204. In the exemplary embodiment, the IBH system 204 includes a first flow control device 258 and a second flow control device 260. More specifically, in the exemplary embodiment, the first flow control device 258 is a manual valve that may be selectively adjusted to prevent or control the flow of the drawn working fluid traveling through the IBH system 204, and the second flow control device 260 may be an automatic control valve that is selectively adjusted by the controller 206.

The IBH system 204 illustrated in FIG. 2 includes three different potential return locations 254 that may be used with the IBH system 204 and/or the IE system 200. More specifically, in the exemplary embodiment, IBH system 204 includes a first return location 262 and/or a second return location 264. The first return location 262 is downstream from the silencer 212. The second return location 264 is upstream from the silencer 212 and downstream from the filter 210. Alternatively, the return location 254 may be any other suitable location upstream from the compressor inlet 134 that enables IBH system 204 to function as described herein.

The IBH system 204 may return the compressed working fluid into the duct via the IBH manifold 214 such that the returned working fluid is combined with existing working fluid contained within the duct, such that the pressure and temperature of the existing working fluid are each increased. In particular, the drawn compressed working fluid, extracted from location 250, has a pressure and a temperature that are each higher than the pressure and temperature of working fluid contained within the inner passage 216, and/or the inlet fluid 220.

The EGR system 202 extracts exhaust gases downstream from the turbine outlet 138. The EGR system 202 includes a return location 280 that is upstream from the compressor inlet 134. The EGR system 202 includes conduits 282, *e.g.,* ducts, pipes, *etc.,* which transfer the extracted exhaust gases to the return location 280, and also includes one or more flow control devices, *e.g*., the flow control device 146, including for example, and without limitation blower(s), ejector(s), compressor(s) coupled in parallel or series (variable or fixed speed controlled). In alternative embodiments, the EGR system 202 may include one or more flow control devices such as valves or regulators, not shown.

The IE system 200 shown in FIG. 3, illustrates the IBH system 204 with the return location upstream from the silencer 212, and the return location of the IBH system 204 is downstream from the return location used with the EGR system 202. In other embodiments, the relative return locations of the IBH and EGR system 202 may be in any suitable location and orientation with respect to each other that enables the IE system 200 to function as described herein. For example, the IBH system 204 may include any of the return locations 264 or 262 illustrated in FIG. 2. Additionally, and/or alternatively, the IBH and/or the EGR systems 202 and 204, respectively, may include one or more return locations arranged in any other suitable location that enables the IE system 200 to function as described herein.

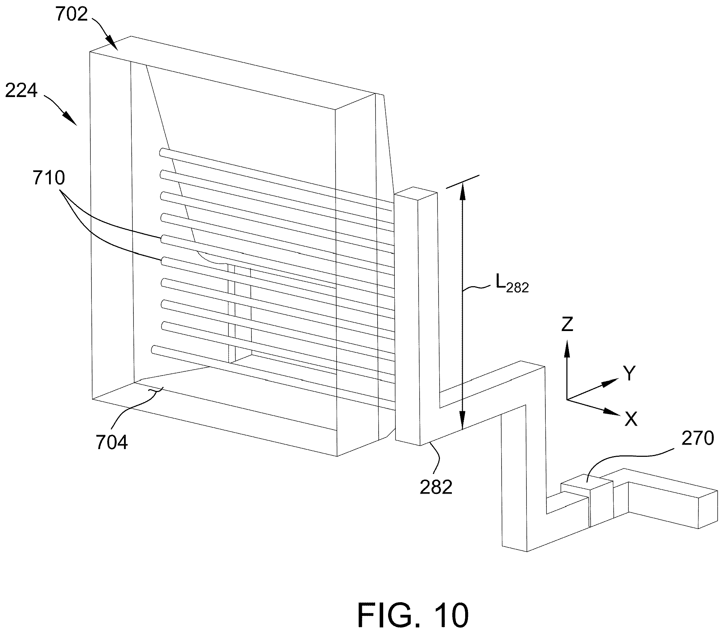

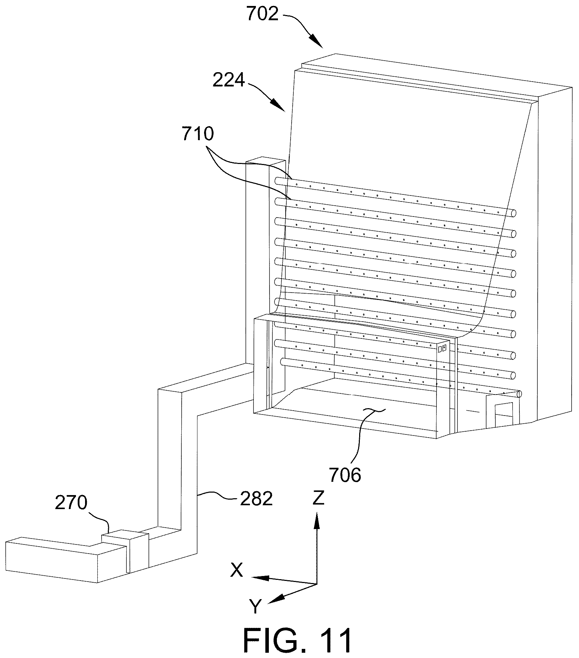

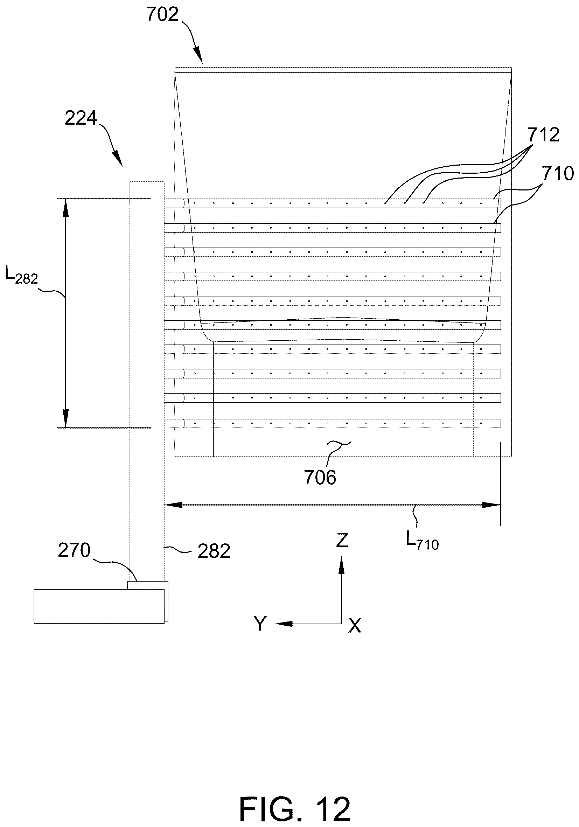

In some embodiments, the EGR system 202 includes a flow control damper 270, *e.g.,* positioned upstream from flow control device 146, to enhance control of the flow of exhaust gas through the conduits 282. In some embodiments, the EGR system 202 may include a variable speed drive or any other suitable flow control device. The EGR system 202 may include a shut off valve 272 for closing off or stopping the flow of exhaust gases through conduits 282. The EGR system 200 may also include an EGR injection manifold 224. *See* Figs. 10-12. In some embodiments, the EGR manifold 224 used with the EGR system and the IBH manifold 214 used with the IBH system 204 have two different configurations, suitable for the respective pressure and temperature of the IBH and EGR systems, 202 and 204.

In some embodiments, supplemental working fluid 274, *e.g.,* air, also may be selectively added to the EGR system 202 to control the temperature or pressure of the exhaust gas that is returned into the inlet duct 218. For example, in some embodiments, the IE system 200 includes one or more flow control devices 276 for controlling the introduction of supplemental working fluid 274 into exhaust gas entrained within the EGR system 202, *e.g.,* within conduit 282. The supplemental working fluid 274 may be introduced into the EGR system 202 downstream from flow control device 146 and/or valve 272 and upstream from the return location 280. The controller 206 is communicatively connected to the flow control device 276 and may selectively control the amount of supplemental working fluid 274 that is added to the EGR system 202. The controller 206 may selectively adjust the amount of supplemental working fluid 274 that is added to the EGR system 202 to selectively control the temperature of the exhaust gas introduced at location 280, thereby controlling the amount of thermal energy supplied to the inlet working fluid entering the compressor section 114.

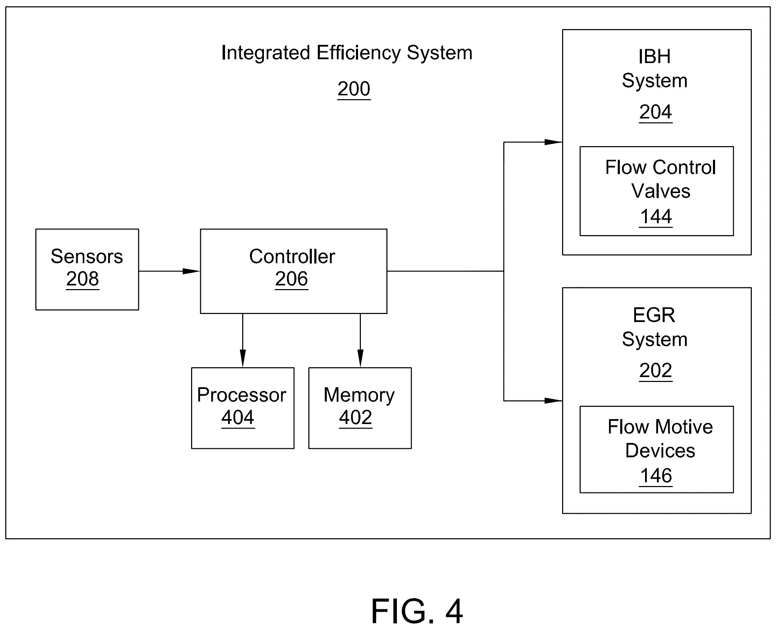

FIG. 4 is a block diagram of an exemplary controller 206 that may be used with system 200. The controller 206 includes a processor 402 and a memory 404. The controller 206 is communicatively coupled to the sensors 208 to receive data from the sensors 208 in real-time or at predefined time periods. In some embodiments, the controller 206 may determine data, *e.g*., pressure, temperature, and/or a flow rate. The controller 206 may utilize the received sensor data to determine a condition of the power generation system 100. For example, the controller 206 may determine if an icing condition, a surge condition, and/or an emission condition exists or is probable to exist. In some embodiments, the controller 206 may determine a temperature condition, such as a threshold temperature necessary for the maintenance of the temperature of the inlet, *e.g.,* an operating temperature necessary to prevent icing or to improve the part load efficiency.

The controller 206 is communicatively coupled to the EGR system 202 and IBH system 204 to control an amount of fluid traveling through each system. The controller 206 may transmit one or more signals to the flow control device 146 to control the flow of exhaust gases through the EGR system 202. The controller 206 may transmit one or more signals to the flow control devices 260 to control the flow of compressed fluid through the IBH system 204.

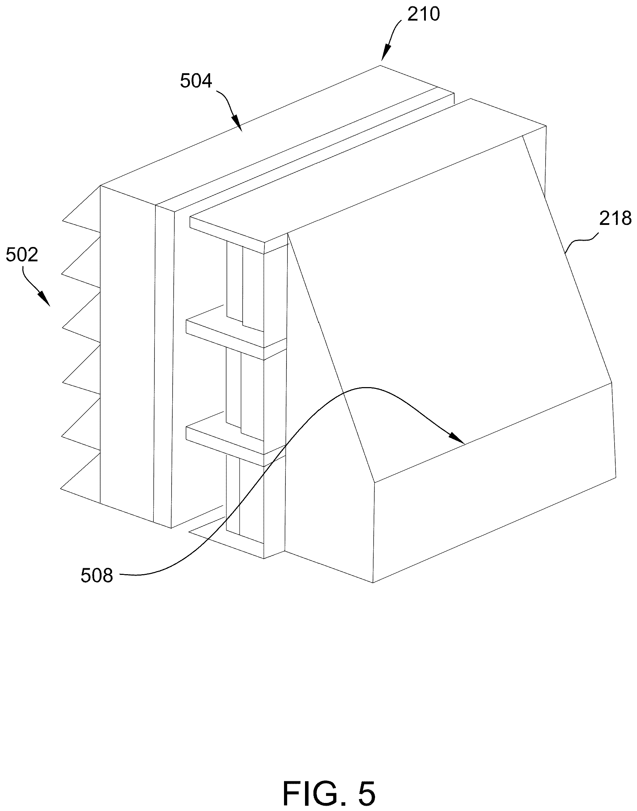

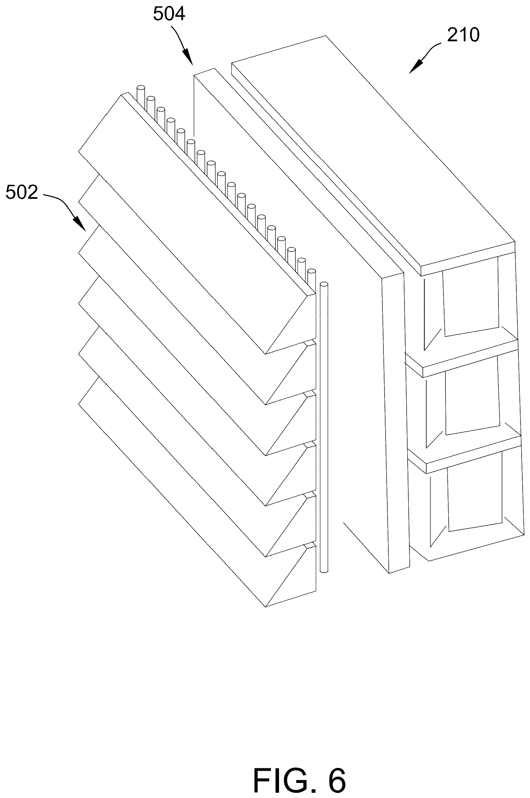

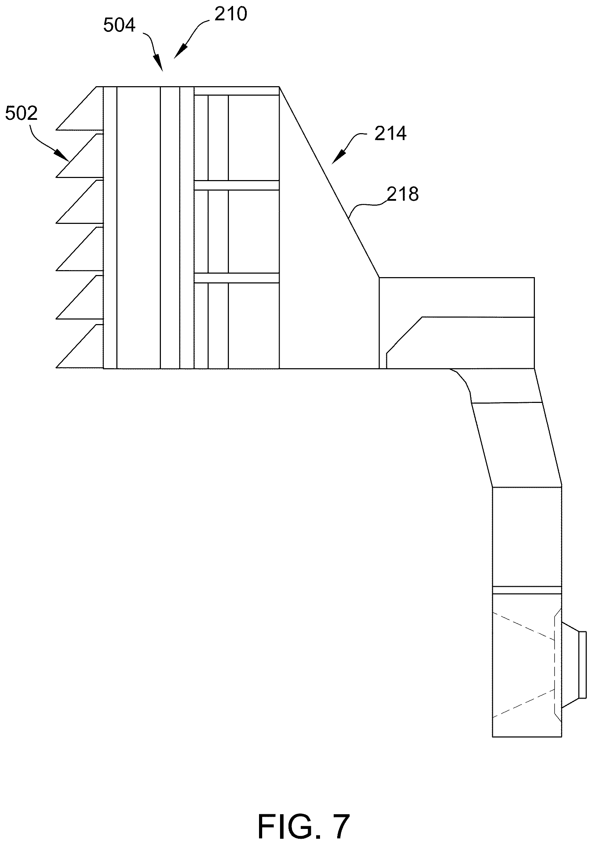

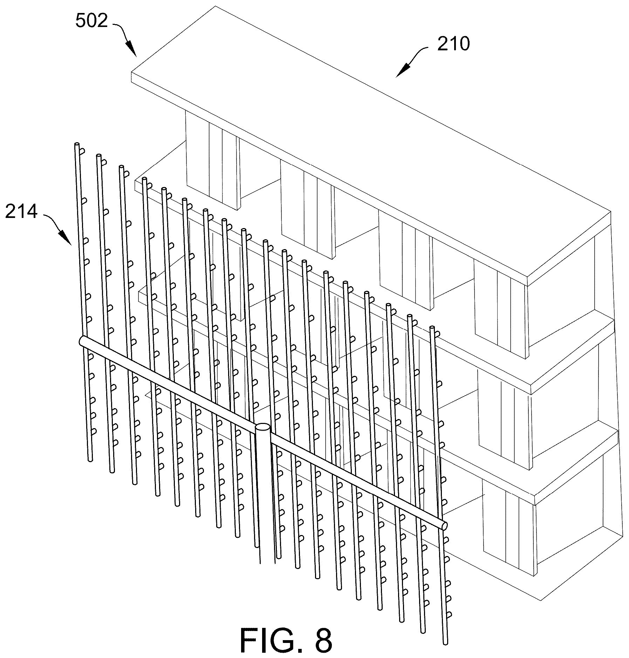

FIGS. 5-8, illustrates a filter 210 that may be used with the IE system 200 shown in FIGS. 1-3, for example. The filter 210 may be upstream from the compressor section 114, and may include one or more filter elements 222, or not shown used to treat the air or working fluid, before the working fluid is introduced to the compressor inlet 134. For example, the filter 210 may remove contaminants entrained in the working fluid. Moreover, the filter 210 may include one or more weather hoods 502, and/or a filter compartment 504 including an outlet 508 for discharging filtered working fluid into the duct 218.

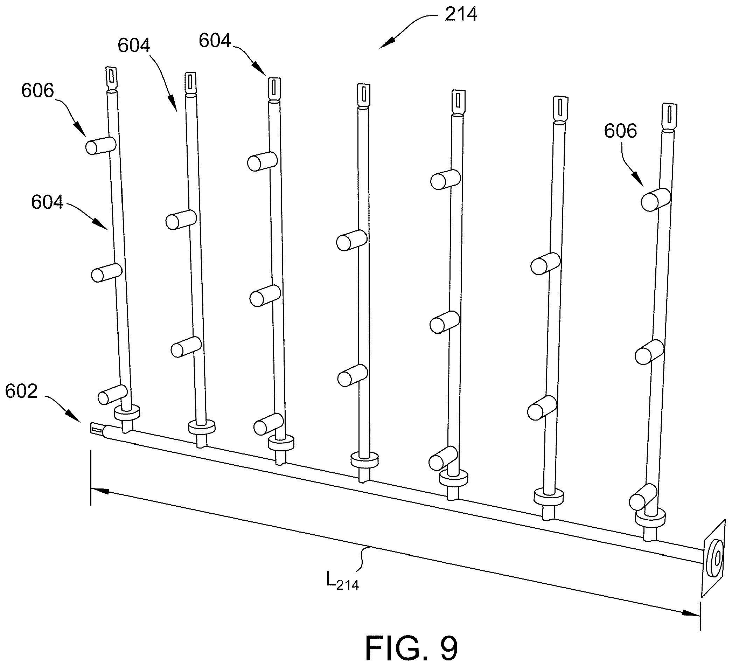

FIG. 9 illustrates an exemplary IBH manifold 214 that may be used with the system 200. In the exemplary embodiment, the IBH manifold 214 may introduce or return the recirculated compressed working fluid of the IBH system 204 into the inlet transition duct 218. The IBH manifold 214 may include a horizontal member 602 and a plurality of vertical members 604 that extend generally perpendicularly from the horizontal member 602 and that are fluidically coupled to the horizontal members 602. The plurality of vertical members 604 may be equi-spaced along a length L₂₁₄ of the horizontal member 602. The IBH manifold 214 includes a plurality of exit members 606 that are fluidically coupled to the vertical members 604. The horizontal member 602, the vertical members 604, and the exit members 606 may be hollow, *e.g*., hallow pipes or tubes, to enable recirculated compressed working fluid to travel through the horizontal member 602 and into the vertical members 604 prior to the compressed working fluid being discharged through the array of exit member 606.

The recirculated compressed working fluid may be motivated to move through the IBH manifold 214 via a pressure differential. For example, the compressed working fluid extracted from the compressor outlet 136 has a higher pressure as compared to an operating pressure downstream from the compressor outlet 136 within the IBH system 204, thus motivating the flow through the IBH manifold 214. The array of exit members 606 distribute the compressed air across the duct 218.

In reference to FIGS. 10 - 12, in some embodiments, the IE system includes the EGR manifold 224 for introducing exhaust flow into the duct 218. The EGR manifold 224 may include a housing 702 having an inlet 704 and an outlet 706. The housing 702 may be a portion of duct 218. The EGR manifold 224 may include one or more pipes 708, extending from, and fluidically coupled to the conduits 282. The pipes 708 may be equally spaced along a vertical length L₂₈₂ of the conduits 282. The pipes 708 may extend, *e.g.,* horizontally, across the duct 218, such that the exhaust gas is distributed equally across the duct 218. The pipes 708 may include a plurality of openings 710 spaced across a length L₇₀₆ of the pipes 706. The exhaust gas travels through conduits 282 through the pipes 708 and exits the pipe 708 through the openings 710 to distribute the exhaust gas to the inlet duct 218 without introducing turbulence. The exhaust gas may be motivated or regulated to move through the EGR manifold 224 by the flow control device 146 and/or the damper 270.

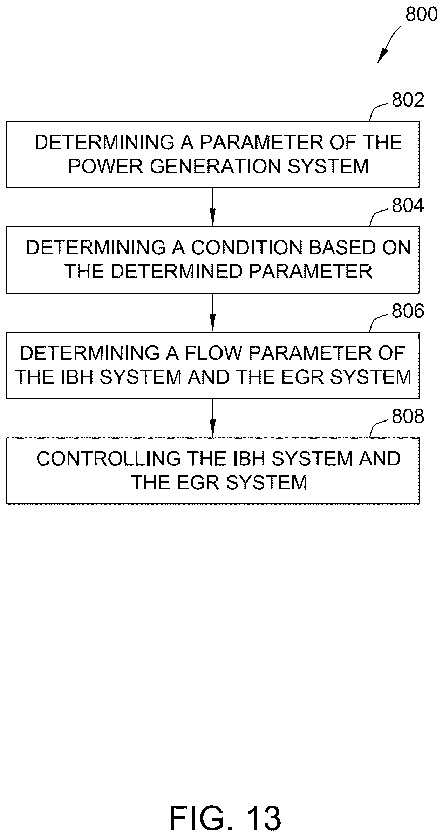

FIG. 13 is a process flow of an exemplary method of operating the integrated efficiency system 200 (IE system 200), including the EGR system 202 and the IBH system 204, for use with a power generating system such as the power generation system 100. Any or all of process 800 may be performed by controller 206, for example.

In some embodiments, process 800 may include selecting an operating condition or an operating mode. In some embodiments, the controller 206 may select an operating mode based on a targeted or desired operating condition. In some embodiments, the operating mode may be selected by an operator, for example, using a user interface. In some embodiments, the controller 206 may select an operating mode based on received sensor data. Operating modes may include an EGR mode in which the controller 206 causes the IE system 200 to utilize the EGR system 202 and during which time, the IBH system 204 is deenergized and/or placed in a standby mode. At least one other operating mode includes an EGR dominate mode, in which the IE system 200 supplies a higher mass flow, or mass flow rate, of exhaust gases through the EGR system 202 as compared to the compressed working fluid drawn downstream from the compressor outlet 136 through the IBH system 204. An operating condition may include ice prevention, compressor surge prevention, an efficiency target, for example. In the embodiments described herein, the IE system 200 may be operated in one or more of a plurality of operating modes, including an EGR mode, wherein the controller 206 causes the IE system 200 to operate the EGR system 202 and the IBH system 204 is deenergized and/or is placed in a standby mode. Alternatively, the controller 206 may cause the IE system 200 to be operated in an EGR dominate mode, wherein both the EGR system 202 and the IBH system 204 are operated, while the IBH system 204 is supplying a minimal amount of compressed working fluid to the inlet.

The process 800 may include detecting 802 one or more parameters of the power generation system 100 and/or the IE system 200. Detecting 802 a parameter may include a temperature detected using a temperature sensor at one or more locations upstream from the compressor inlet 134. Detecting 802 a parameter may include a pressure detected using a pressure sensor at one or more locations downstream from the compressor inlet 134. In some embodiments, process 800 includes determining, *e.g*., using controller 206, one or more parameters of the power generation system 100 and/or the IE system 200.

The process 800 may include determining a condition, based on the detected 802 parameter or the determined parameter. In some embodiments, the process 800 includes determining 806 a surge condition. In some embodiments, a surge condition may be determined 806 using the controller 206. The controller 206 may determine a surge condition using any suitable method, *e.g*., using a compressor map including a surge line. In some embodiments, the controller 206 may determine a surge condition based on a detected 802 parameter and/or a determined parameter. In some embodiments, the process 800 includes determining 806 an icing condition based on a detected 802 parameter and/or a determined parameter.

Process 800 may include determining 806 a target flow parameter of the IBH system 204 and a target flow parameter of the EGR system 202. In some embodiments, the flow parameter may be a mass flow rate. In some embodiments, process 800 may include determining a mass parameter of the IBH and/or the EGR system 202. For example, the controller 206 may determine a IBH mass parameter and/or an EGR mass parameter. The IBH mass parameter is indicative of an amount of compressed working fluid being delivered upstream from the compressor using the IBH system 204, and a EGR mass parameter is indicative of an amount of exhaust gases delivered upstream from the compressor using the EGR system 202.

In some embodiments, process 800 includes determining, using controller 206, a target temperature of the returned exhaust gas, within the EGR system 202, that is introduced at location 280. The process 800 may include the controller 206 selectively adjusting the amount of supplemental working fluid 274 added to the exhaust gas in order to achieve the determined target temperature. The controller 206 may selectively adjust the amount of added supplemental working fluid 274 by transmitting one or more signals to the flow control device 276.

In some embodiments, process 800 includes determining, *e.g*., using controller 206, a target amount of working fluid to be delivered to the compressor section 114. The process 800 may include the controller 206 transmitting one or more signals to the inlet guide vane assembly 148, the IBH system 204, and the EGR system 202, to control the amount of working fluid that is delivered to the compressor section 114. In some embodiments, the process 800 may include determining, *e.g*., using controller 206, an amount of working fluid to be delivered to the compressor section 114 based on a temperature of the working fluid upstream from the compressor section 114.

The controller 206 may determine the flow parameter based on one or more conditions detected by the sensors 208 or conditions determined by the controller 206. In some embodiments, the controller 206 may determine the flow parameter based on a selected condition. In some embodiments, the controller 206 may determine the flow parameter based on the selected operating mode, *e.g.,* a mode selected by an operator.

Process 800 includes simultaneous controlling 808 the EGR system 202 and the IBH system 204, by the controller 206, based on the determined 806 flow parameters.

In some embodiments, process 800 includes iteratively detecting, *e.g*., in real-time or periodically, operating conditions such as the flow parameters, and simultaneously controlling the EGR system 202 and the IBH system 204 based on the detected conditions to facilitate optimizing, the power generation system 100 by preventing icing, and/or preventing a surge event, using a combination of the EGR system 202 and the IBH system 204. Moreover process 800 can be used to facilitate improving the overall efficiency of the power generation system 100.

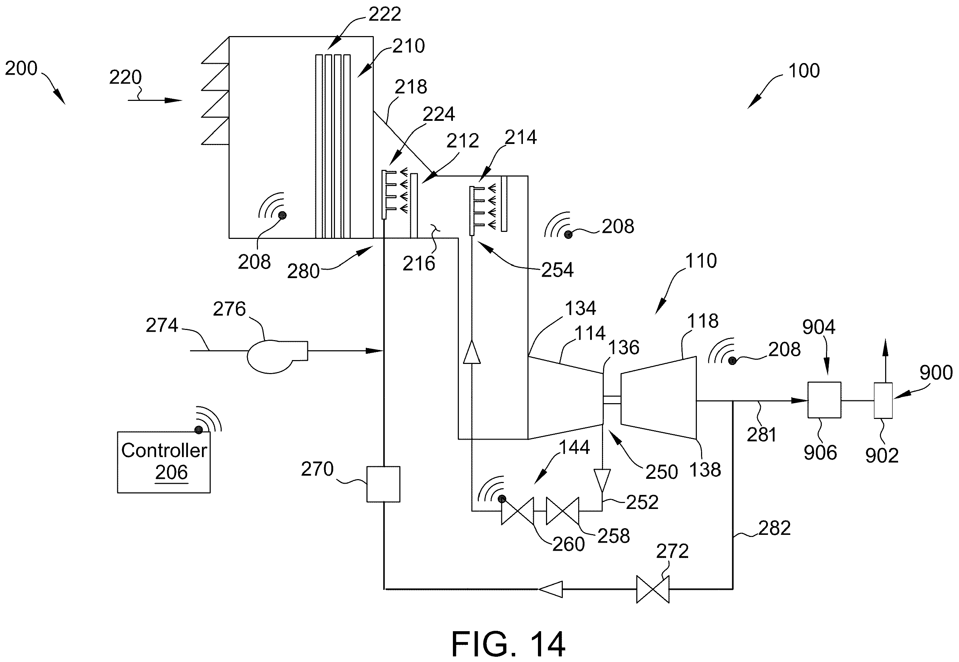

FIGS. 14-21 are schematic illustrations of additional exemplary integrated efficiency (IE) systems 200 that may be used with the power generation system 100 shown and discussed herein with respect to FIG. 1, including EGR system 202 and the IBH system 204. It is understood that similarly numbered and/or named components may function in a substantially similar fashion. Redundant explanation of these components has been omitted for clarity.

In the non-limiting example shown in FIG. 14, power generation system 100 includes a supplemental component 900 downstream from gas turbine engine 110. More specifically, supplemental component 900 is downstream from turbine section 118 and is in flow communication with exhaust line 281. As discussed herein, turbine section 118 exhausts, generates, and/or discharges exhaust gases through exhaust line 281 during operation of power generation system 100. The gases exhausted by turbine section 118, through exhaust line 281, are channeled to supplemental component 900 for additional processing, based on, at least in part, the configuration of supplemental component 900 and/or the configuration of power generation system 100 including EGR system 202. In the non-limiting example shown in FIG. 14, power generation system 100 is formed as a gas turbine simple cycle, and supplemental component 900 is formed as and/or includes an exhaust stack 902 of gas turbine simple cycle forming power generation system 100. Exhaust stack 902 is fluidly coupled and/or in flow communication with exhaust line 281 and is oriented to receive exhaust gases from turbine section 118. Prior to discharging the exhaust gases from exhaust stack 902 and out of power generation system 100 (e.g., into ambient air), exhaust stack 902 cools and/or removes at least a portion of contaminants or pollutants (e.g., carbon) included within the exhaust gases.

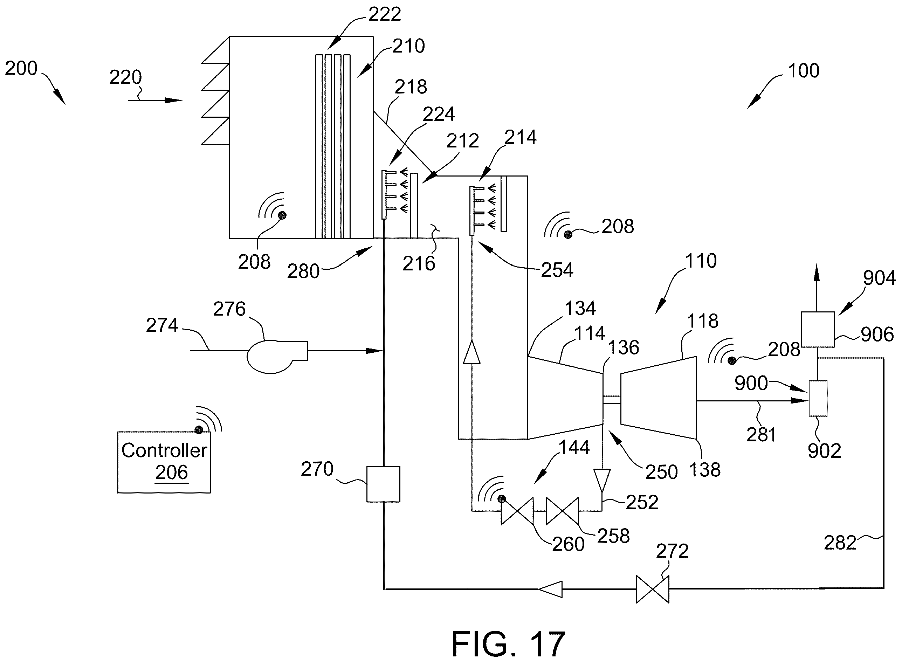

In the exemplary embodiment, EGR system 202 is in flow communication with turbine section 118 of gas turbine engine 110 and includes EGR conduit 282 and EGR manifold 224. As shown and discussed herein, conduit 282 is fluidly coupled to exhaust line 281 as well to as EGR manifold 224 upstream from inlet 134 for compressor section 114. Conduit 282 of EGR system 202 is also fluidly coupled to and/or in flow communication with exhaust line 281, upstream from supplemental component 900 formed as exhaust stack 902. In other non-limiting examples (see, FIG. 17), conduits 282 can be fluidly coupled, downstream from supplemental component 900. Additionally as discussed herein, conduit 282 directs a portion of the exhaust gases from exhaust line 281 to return location 280 and/or EGR manifold 224 during operation of power generation system 100. Distinct from embodiments discussed herein (see e.g., FIG. 3), conduit 282 shown in FIG. 14 does not include flow control device 146 (e.g., blower(s), ejector(s), etc.). That is, no flow control device 146 is disposed on and/or in flow communication with conduits 282 to aid in the flowing of exhaust gases from exhaust line 281 to EGR manifold 224.

In a non-limiting example, and instead of flow control device 146, IE system 200 may include a flow restriction component 904 in flow communication with exhaust line 281. That is, in such an embodiment, flow restriction component 904 of IE system 200 may be in flow communication with turbine section 118 and/or exhaust line 281 to receive at least a distinct portion of the exhaust gases flowing through exhaust line 281 to exhaust stack 902. The distinct portion of the exhaust gases provided to flow restriction component 904 includes the remaining portion of the exhaust gases of turbine section 118 that are not channeled and/or provided to conduit 282 of EGR system 202. Flow restriction component 904 is also in flow communication with supplemental component 900 formed as exhaust stack 902 and is oriented to provide the distinct portion of the exhaust gases to supplemental component 900 during operation of power generation system 100. In the exemplary embodiment of FIG. 14, flow restriction component 904 is downstream from conduit 282 of EGR system 202 and is upstream from supplemental component 900 formed as exhaust stack 902.

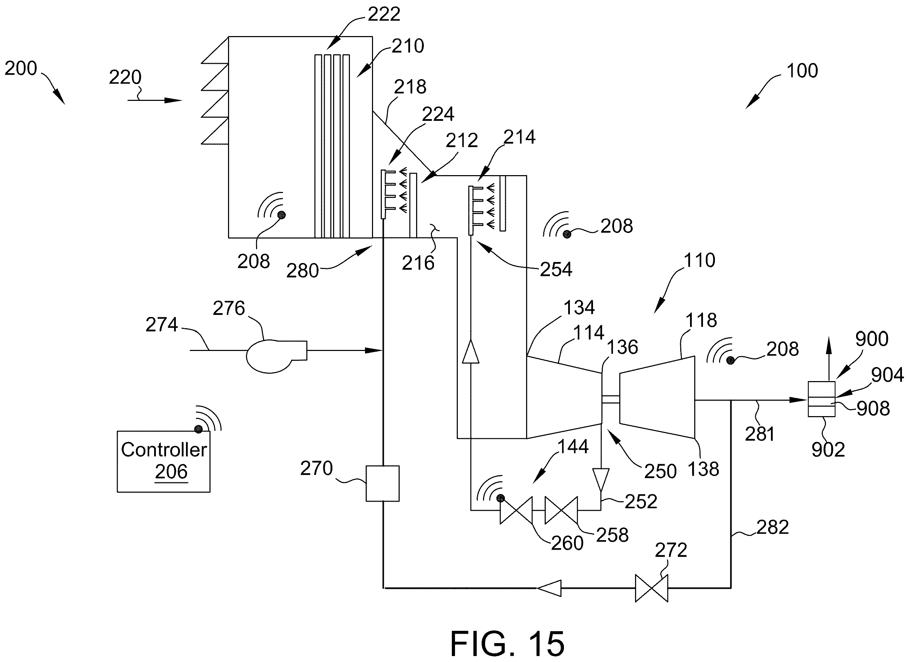

Flow restriction component 904 of IE system 200 is oriented to selectively adjust the flow rate of the exhaust gases generated by turbine section 118 and/or selectively adjust a pressure of the exhaust gas. For example, flow restriction component 904 may be formed from any suitable device, component, assembly, and/or system that is configured to facilitate increasing a pressure (e.g., backpressure) of the exhaust gases generated by turbine section 118 and flowing through exhaust line 281 during operation of gas turbine engine 110 for power generation system 100. The adjusting and/or increasing of the pressure of the exhaust gases generated by turbine section 118 creates a pressure differential within power generation system 100. In a non-limiting example, and as a result of including flow restriction component 904 downstream of turbine section 118 and/or conduit 282 of EGR system 202, the exhaust gases extracted from exhaust line 281 using conduit 282, may have a higher pressure as compared to working fluid and/or air that is upstream from the compressor inlet 134 (e.g., inlet fluid 220). Because of the pressure differential and/or increased pressure of the exhaust gases within exhaust line 281 and/or conduit 282, a portion of the exhaust gases flow through conduit 282 of EGR system 202 to EGR manifold 224 and is subsequently distributed upstream from the compressor inlet 134, as similarly discussed herein. In non-limiting examples, flow restriction component 904 is formed as and/or includes an adjustable dampener 906, or alternatively, a reducer component 908 (see, FIG. 15) including a converging diameter. As discussed herein, controller 206 can selectively adjust the position/operation of the adjustable dampener 906 to control the flow rate of the exhaust gases and/or selectively adjust the pressure of the exhaust gases flowing through 281.

In the non-limiting example shown in FIG. 14, flow restriction component 904 is formed as adjustable dampener 906. During operation of gas turbine engine 110, the position and/or operational characteristics of adjustable dampener 906 can be adjusted, altered, and/or modified to selectively increase and/or decrease the flow rate of the exhaust gases flowing through exhaust line 281 by partially restricting and/or opening exhaust line 281. Adjusting the flow rate in turn facilitates increasing or decreasing the pressure (e.g., back pressure) of the exhaust gases flowing through exhaust line 281, as well as increasing or decreasing the pressure the pressure of the portion of the exhaust gases extracted by conduit 282 of EGR system 202. In an example embodiment, controller 206 is communicatively coupled to adjustable dampener 906 to selectively adjust the flow rate and/or pressure of the exhaust gases flowing through exhaust line 281, as discussed herein. The selective adjustment of the flow rate and/or pressure of the exhaust gases is based on, at least in part, operational characteristics of gas turbine engine 110 and/or power generation system 100. For example, operational characteristics of gas turbine engine 110 and/or power generation system 100 including, but not limited to, the temperature of the exhaust gas, emission gas attributes, firing temperatures of gas turbine engine 110, compressor section 114 protection thresholds, ambient or surrounding temperatures for gas turbine engine 110, generated load for gas turbine engine 110, and the like are determined, detected, and/or analyzed by controller 206 of IE system 200.

In a non-limiting example, where gas turbine engine 110 is operating at approximately 50% operational load, controller 206 can determine that dampener 906 should be selectively adjusted (e.g., partially closed) to restrict and/or decrease the air flow rate of the exhaust gases. Decreasing and/or restricting the air flow increases the pressure of the exhaust gases to create a pressure differential necessary for a portion of the exhaust gases to flow and/or be extracted by conduit 282, and be subsequently provided to EGR manifold 224. In another non-limiting example where gas turbine engine 110 is operating at approximately 100% operational load, controller 206 can determine that dampener 906 should be selectively adjusted (e.g., opened) to not restrict and/or increase the air flow rate of the exhaust gas. Increasing and/or non-restriction of the air flow decreases the pressure of the exhaust gases. The pressure can be decreased when it is determined that gas turbine engine 110 and/or power generation system 100 is operating with a backpressure that is above a predefined threshold and/or the pressure of the exhaust gases flowing within exhaust line 281 exceeds a predetermined operational threshold. In this non-limiting example, the predetermined operational threshold is a pressure that is greater than a required pressure for the portion of the exhaust gases to be extracted from exhaust line 281 and/or flowed through conduit 282 during operation of power generation system 100. Reducing the pressure by adjusting and/or opening dampener facilitates maintaining the pressure differential necessary for a portion of the exhaust gases to flow and/or be extracted by conduit 282, and subsequently provided to EGR manifold 224, without significantly reducing the operational efficiency of gas turbine engine 110.

Although discussed herein as 50% and/or 100% operational load, it is understood that the controller 206 is configured to selectively adjust dampener 906 based on various operational loads. For example, controller 206 is configured to selectively adjust dampener 906 to restrict or decrease the air flow rate of the exhaust gases, and/or increase and/or not restrict the air flow of the exhaust gases based on operational characteristics of gas turbine engine 110 including, but not limited to, a determined or detected operational load. In non-limiting examples, increasing and/or decreasing the air flow of the exhaust gases, and in turn increasing and/or decreasing the pressure of the exhaust gases to create the desired pressure differential, can be based on, at least in part, the operational load ranging from 100% operational load to a predetermined minimum or minimal operation load for gas turbine engine 110 (e.g., 90% operational load, 80% operational load, 70% operational load, 60% operational load, 50% operational load, 40% operational load, and so on).

Additionally in the non-limiting example, and as similarly discussed herein, IE system 200 also includes IBH system 204 including IBH conduit 252. IBH conduit 252 is configured to provide, extract, and/or channel a flow of compressed working fluid from outlet 136 of compressor section 114 and provide the extracted flow to IBH manifold 214 upstream from inlet 134 of compressor section 114 during operation of power generation system 100. Controller 206 of IE system 200 is also communicatively coupled with IBH system 204. During operation of power generation system 100, controller 206 is configured to selectively adjust between providing the portion of exhaust gases from gas turbine engine 110 using EGR system 202 and providing the extracted flow of working fluid from compressor section 114 of gas turbine engine 110 using IBH system 204. More specifically, and based on the determined operational characteristics, controller 206 of IE system 200 can selectively adjust and/or selectively channel the exhaust gases generated by turbine section 118 to EGR manifold 224 via conduit 282, and/or provide the extracted flow from outlet 136 of compressor section 114 to IBH manifold 214 via IBH conduit 252. For example, where gas turbine engine 110 does not generate a predetermined amount of exhaust gases and/or cannot create the desire pressure differential for the exhaust gases flowing through exhaust line 281 without negatively impacting the operational efficiency of gas turbine engine 110 (e.g., air flow overly restricted by dampener), controller 206 can cease providing the portion of exhaust gases to EGR system 202. Rather, controller 206 ensures that only the extracted flow of working fluid from compressor section 114 is provided upstream of inlet 134 of compressor section 114 using IBH system 204. Alternatively, and based on, for example, the higher pressure of the exhaust gases flowing through exhaust line 281, controller 206 can shutdown operation of IBH system 204 and only provide a portion of the exhaust gases from turbine section 118 upstream of inlet 134 of compressor section 114 using EGR system 202 during operation of power generation system 100. In the non-limiting example, IBH conduit 252 is shut, closed, and/or controlled to "turned off" such that flow is not extracted from compressor section 114 and/or IBH conduit 252 does not provide extracted flow to IBH manifold 214. In other non-limiting examples, and as similarly discussed herein EGR system 202 and IBH system 204 of IE system 200 can operate simultaneously for providing working fluid and/or exhaust gases to inner passage 216, upstream of inlet 134 of compressor section 114 during operation.

FIG. 15 shows another non-limiting example of power generation system 100 including gas turbine engine 110 and EGR system 202. In the non-limiting example, flow restriction component 904 includes reducer component 908 in flow communication with exhaust line 281. More specifically, reducer component 908 is flow communication with exhaust line 281 for receiving at least a portion of exhaust gases from turbine section 118. Additionally as shown in the non-limiting example of FIG. 15, reducer component 908 forming flow restriction component 904 is included and/or positioned directly within supplemental component 900. As such, both exhaust stack 902 forming supplemental component 900 and reducer component 908 forming flow restriction component 904 are downstream of conduit 282 of EGR system 202. During operation, the portion of exhaust gases from turbine section 118 can initially flow through exhaust stack 902 for processing, before flowing through reducer component 908, and subsequently being discharged from exhaust stack 902. As discussed herein, the converging diameter of the reducer component 908 can similarly control the flow rate of the exhaust gases and/or adjust the pressure of the exhaust gases flowing through 281. That is, where flow restriction component 904 includes the reducer component 908, the backpressure of the exhaust gases flowing through exhaust line 281 is continuously and/or constantly increased, such that the pressure of the exhaust gases is higher than the pressure of the working fluid and/or air that is upstream from the compressor inlet 134. Although shown in the non-limiting example of FIG. 15 as reducer component 908, it is to be understood that flow restriction component 904 can be formed as adjustable dampener 906, where adjustable dampener 906 is included and/or positioned directly within supplemental component 900 (e.g., exhaust stack 902).

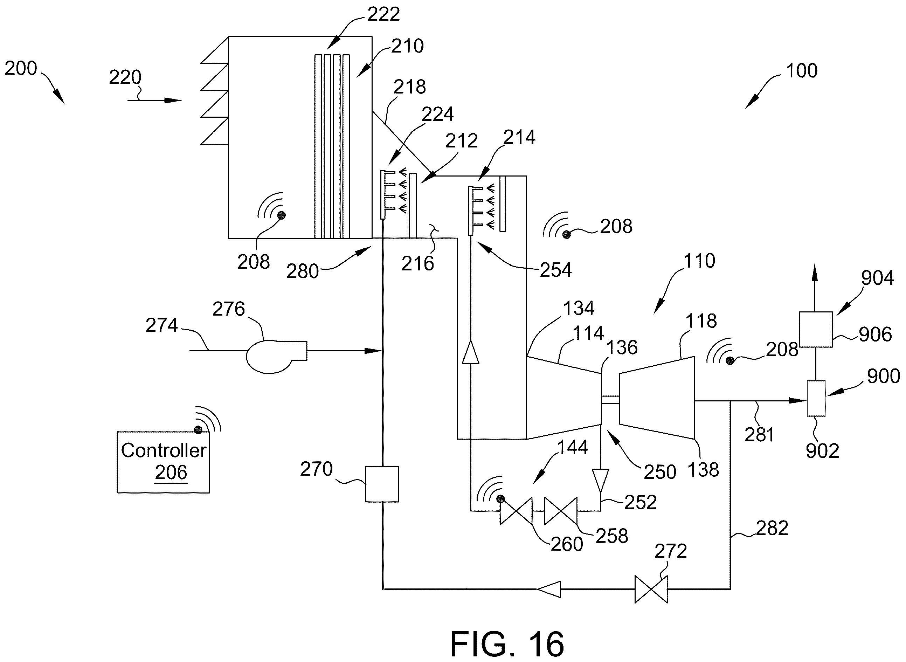

In the non-limiting example shown in FIG. 16, flow restriction component 904 is downstream from supplemental component 900. More specifically, adjustable dampener 906 forming flow restriction component 904 is in flow communication with exhaust line 281 and is downstream from both conduit 282 fluidly coupled to exhaust line 281, as well as exhaust stack 902 forming supplemental component 900. During operation, the portion of exhaust gases flowing through 281 is provided to exhaust stack 902 for processing before flowing through flow restriction component 904 and subsequently being discharged from gas turbine engine 110, as discussed herein. As similarly discussed herein, dampener 906 is selectively adjustable to alter the flow rate of the exhaust gases flowing from turbine section 118, and/or adjust the pressure of the exhaust gases flowing through exhaust line 281.

As shown in FIG. 17, conduit 282 is downstream from supplemental component 900. More specifically, conduit 282 of EGR system 202 is fluidly coupled to and/or in flow communication with line fluidly coupling exhaust stack 902 and adjustable dampener 906 of IE system 200. As such, supplemental component 900 formed as exhaust stack 902 is upstream from both EGR conduit 282 and flow restriction component 904 formed as adjustable dampener 906, while adjustable dampener 906 is downstream of EGR conduit 282.

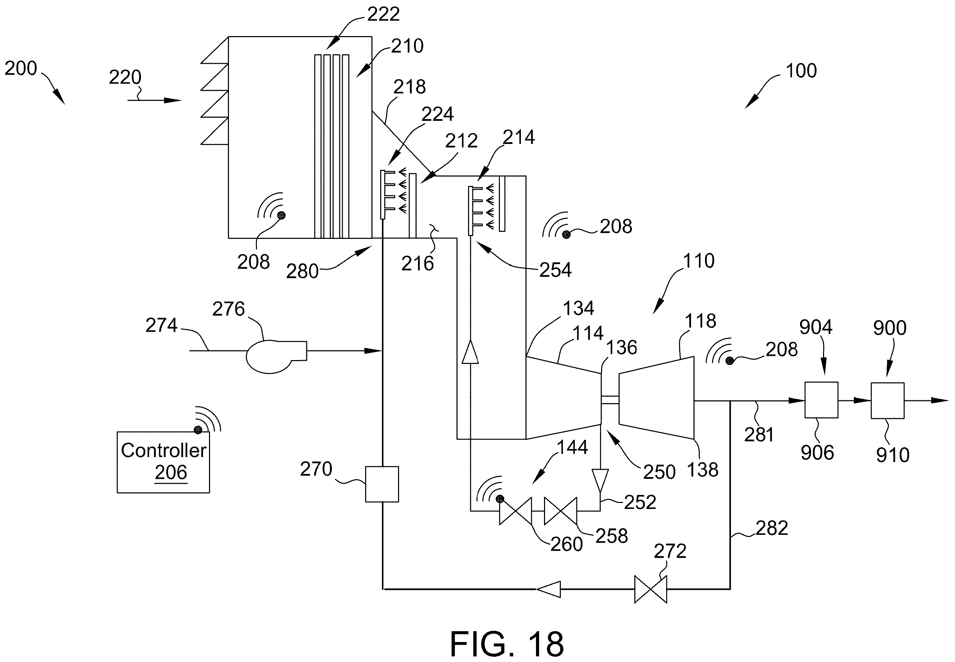

FIG. 18 is another non-limiting example of power generation system 100 including a boiler or a heat recovery steam generator (HRSG) 910 (hereafter, "HRSG 910"). More specifically, supplemental component 900 of power generation system 100 includes a HRSG 910 in flow communication with and downstream from exhaust line 281. HRSG 910 is formed from any suitable device or system that facilitates the generation of steam using the exhaust gases generated by turbine section 118 and channeled to HRSG 910 via exhaust line 281. As shown in FIG. 18, flow restriction component 904, formed as adjustable dampener 906, is upstream from HRSG 910, and downstream of EGR conduit 282 fluidly coupled to exhaust line 281. In other non-limiting examples (not shown), and as similarly discussed herein, flow restriction component 904 can be positioned within HRSG 910, or alternatively can be downstream from HRSG 910.

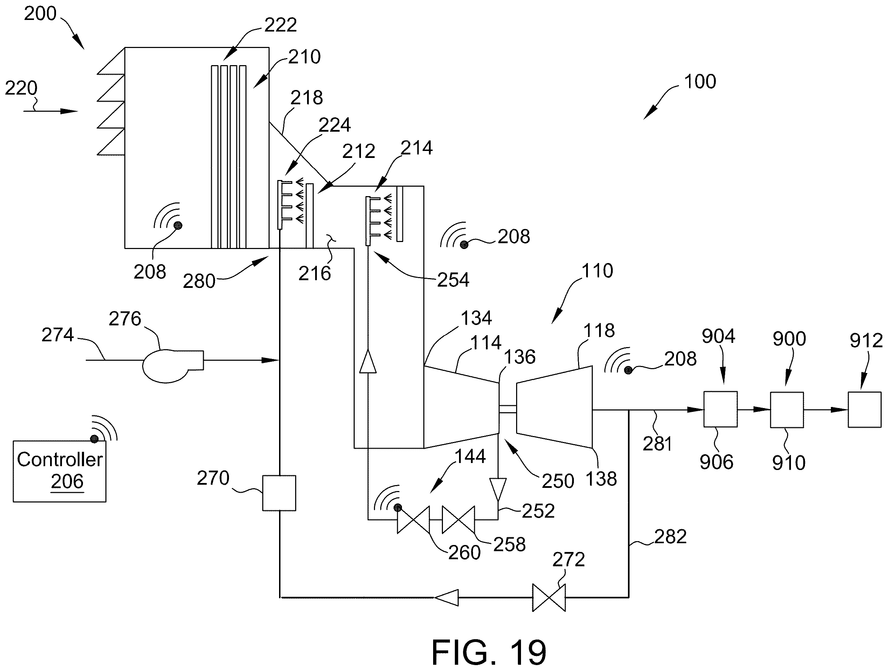

FIGS. 19-21 depict non-limiting examples of power generation system 100 including HRSG 910, and a steam turbine engine 912. That is, FIGS. 19-21 depict power generation system 100 as combined cycle power plant that includes both gas turbine engine 110 and steam turbine engine 912 for generating power. In the non-limiting examples, HRSG 910 forms supplemental component 900, where HRSG 910 is in flow communication with exhaust line exhaust line 281 for receiving at least a portion of the exhaust gases generated by turbine section 118. HRSG 910 is formed from any suitable system and/or component that facilitates generating steam from the channeled exhaust gases, and subsequently provides the steam to steam turbine engine 912 for additional processing and/or power generation.

In the non-limiting example shown in FIG. 19, flow restriction component 904, formed as adjustable dampener 906, is upstream from both HRSG 910 and steam turbine engine 912. Additionally, adjustable dampener 906 is downstream from EGR conduit 282 fluidly coupled to exhaust line 281. In non-limiting examples, dampener 906 is formed as a diverter dampener included within the power generation system 100.

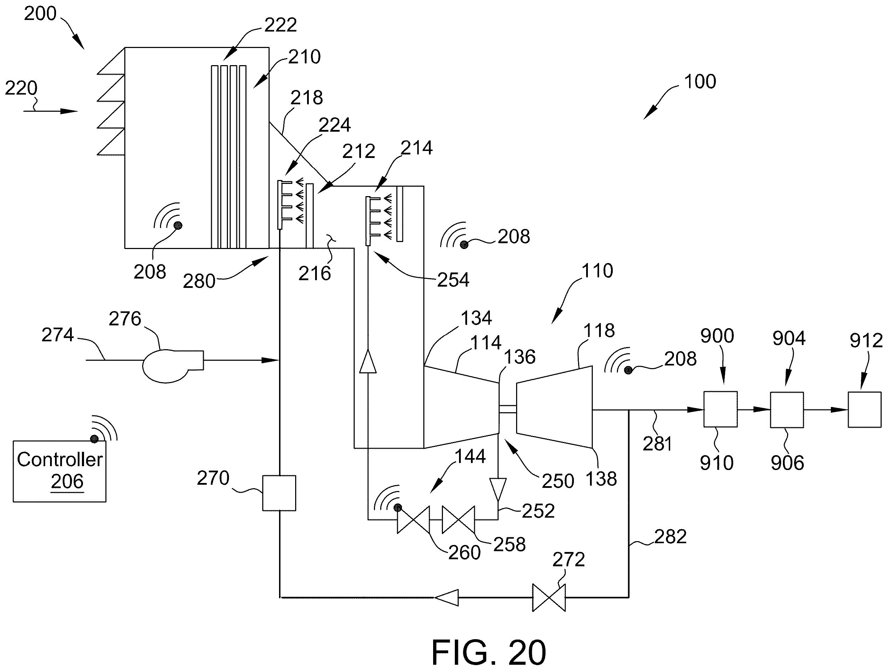

Conversely, and as shown in the non-limiting example of FIG. 20, flow restriction component 904 is downstream from HRSG 910, and upstream from steam turbine engine 912 for power generation system 100. In this example, adjustable dampener 906 forming flow restriction component 904 is downstream from EGR conduit 282 fluidly coupled to exhaust line 281.

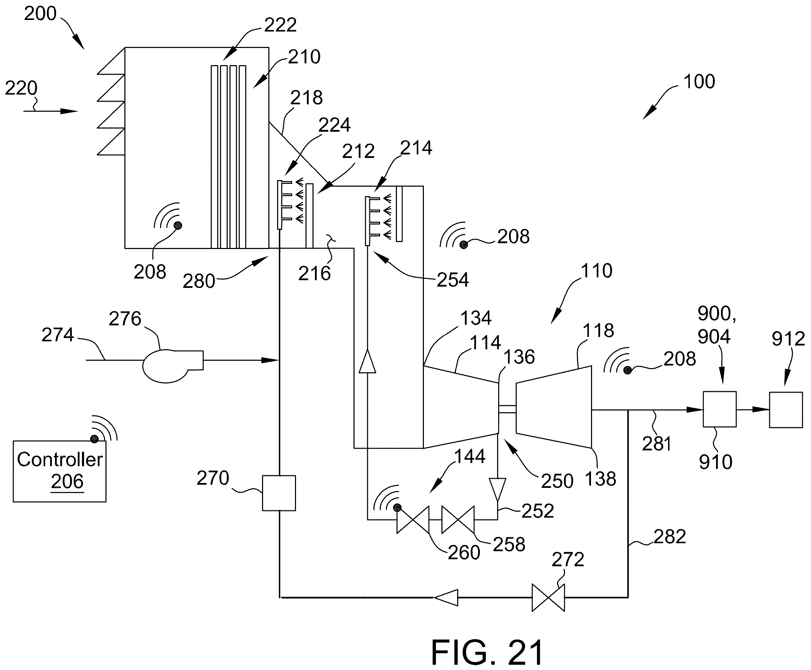

Although flow restriction component 904 is discussed herein as including and/or being formed as adjustable dampener 906 or reducer component 908, it is understood that power generation system 100 is capable of generating the desired pressure differential for the exhaust gases during operation.. For example and turning to the non-limiting example shown in FIG. 21, power generation system 100 includes HRSG 910 forming supplemental component 900, and steam turbine engine 912 fluidly coupled to and/or in flow communication with HRSG 910. HRSG 910 is also fluidly coupled directly to exhaust line 281, such that a portion of the exhaust gases generated by turbine section 118 are provided directly to HRSG 910. As shown, and with comparison to FIGS. 19 and 20, power generation system 100 shown in FIG. 21 does not include dampener 906 or reducer component 908, downstream from conduit 282. Rather, HRSG 910 is directly downstream from EGR conduit 282. In this non-limiting example, it is to be understood that power generation system 100, formed as a combined cycle power plant and including turbine section 118, HRSG 910, and steam turbine engine 912, facilitates the generation of the pressure differential and/or desired back pressure for the exhaust gases channeled through exhaust line 281. More specifically, HRSG 910 forms and/or corresponds to both supplemental component 900, as well as flow restriction component 904. In the exemplary embodiment shown in FIG. 21, HRSG 910 facilitates generating steam from the channeled exhaust gases, as discussed herein. Additionally, operation of HRSG 910 also facilitates the generation of the desired pressure differential for the exhaust gases, and in turn, facilitates the providing or channeling of a portion of the exhaust gases to conduit 282 of IE system 200. Operational parameters of HRSG 910, flow control dampener 270, and/or valve 272 can be adjusted to generate the desired pressure differential to flow a portion of the exhaust gases through conduit 282, as discussed herein.

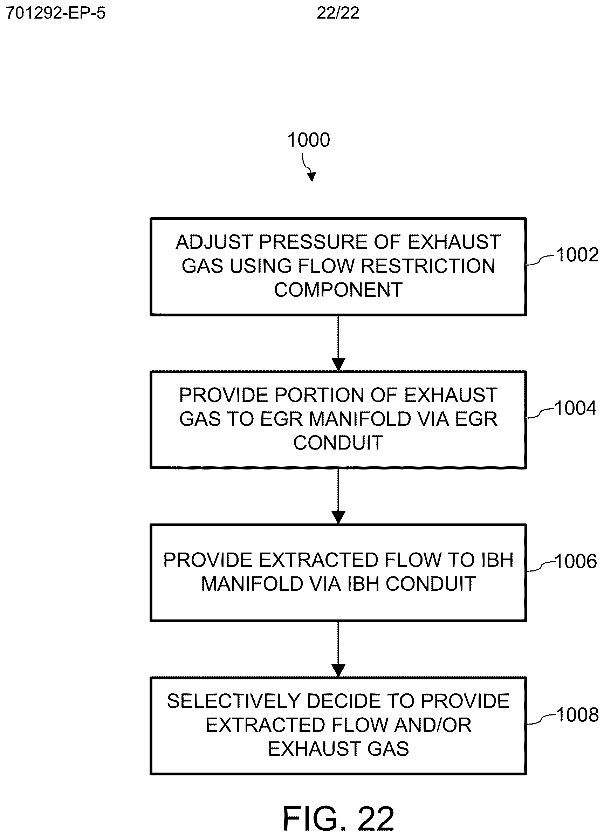

FIG. 22 is a process flow of an exemplary method of operating the integrated efficiency system 200 (IE system 200), including the EGR system 202 and the IBH system 204, for use with power generation system 100. Any or all of process 1000 may be performed by controller 206, for example.

In process 1000, a pressure of exhaust gases generated by a gas turbine section of a gas turbine engine are adjusted. More specifically, the exhaust gases generated by the turbine section of the gas turbine engine is adjusted, altered, and/or modified 1002 using a flow restriction component. The flow restriction component is in flow communication with an exhaust line of the gas turbine engine. In example embodiments, the flow restriction component is fluidly coupled and/or in direct communication with the exhaust line, while in other embodiments, the flow restriction component can be downstream from, but in flow communication with, the exhaust line receiving the exhaust gases from the turbine section of the gas turbine engine. The flow restriction component can be formed from any suitable device or component that is configured to selectively adjust 1002 the flow rate and/or the pressure of the exhaust gases generated by the turbine section. For example, the flow restriction component can include, but is not limited to only including, an adjustable dampener and/or a reducer component including a converging diameter.

Adjusting 1002 the pressure of the exhaust gases can also include selectively adjusting the flow restriction component. For example where the flow restriction component is formed as an adjustable dampener, adjusting 1002 the pressure of the exhaust gases in process 1000 can include selectively adjusting the dampener forming the flow restriction component to one of increasing or decreasing the pressure (e.g., backpressure) of the exhaust gases generated by the turbine section. The selective adjusting of the dampener to increase/decrease the pressure of the exhaust gases can include one of increase or decrease the flow rate of the exhaust gases flowing through the exhaust line by adjusting the operation or position (e.g., partially opening, partially-closing) the adjustable dampener to restrict or expand the flow of the exhaust gas.

In process 1000, the exhaust gases generated by the turbine section of the gas turbine engine are provided 1004 to an exhaust gas recirculation (EGR) manifold. More specifically, an EGR conduit in flow communication and/or fluidly coupled to the exhaust line extracts and/or receives a portion of the exhaust gases and subsequently channels the portion of the exhaust gases to the EGR manifold upstream from an inlet of a compressor of the gas turbine engine. The EGR conduit is fluidly coupled to the exhaust line upstream of the flow restriction component. A portion of the exhaust gases is extracted by and/or flown into the EGR conduit as a result of a pressure differential of the exhaust gas. For example, the exhaust gases generated by the turbine section may have a higher pressure as compared to working fluid and/or air that is upstream from the compressor inlet. Because of the pressure differential and/or increased pressure of the exhaust gases within the exhaust line, a portion of the exhaust gases flow through the EGR conduit of the EGR system to the EGR manifold and are subsequently distributed upstream from the compressor inlet for gas turbine engine.

In process 1000, an extracted flow from an outlet of the compressor section of the gas turbine engine is provided 1006 to an inlet bleed heat (IBH) manifold. More specifically, an IBH conduit in flow communication and/or fluidly coupled to an outlet of the compressor section of the gas turbine engine extracts and/or receives a portion of the compressed working fluid from the compressor section, and subsequently flows the portion of the flow to the IBH manifold upstream of an inlet of the compressor. The IBH manifold can be downstream from the EGR manifold of the EGR system.

In process 1000, it is selectively decided 1008 whether to provide the extracted flow of the compressed working fluid and/or the exhaust gases generated by the turbine section. That is, and based on determined operational characteristics of the gas turbine engine, it is selectively decided and/or determined 1008 whether to provide the extracted flow to the IBH manifold via the IBH conduit, and/or whether to provide the exhaust gases generated by the turbine section of the gas turbine engine to the EGR manifold via the EGR conduit. Operational characteristics used to determine the selective providing of the extracted flow and/or exhaust gases during process 1000 can include, but are not limited to only including, the temperature of the exhaust gases, emission gas attributes, firing temperatures of the gas turbine engine, the compressor section protection thresholds, ambient or surrounding temperatures for the gas turbine engine, generated load for the gas turbine engine, and the like. In non-limiting embodiments, the extract flow and the exhaust gases can be provided upstream of the inlet of the compressor simultaneously, or alternatively, can be provided to the power generation system mutually exclusive of one another. That is, in a non-limiting example, the extraction flow can be provided to the IBH manifold via the IBH conduit, and simultaneously, the exhaust gases can be provided to the EGR manifold via the EGR conduit. In another non-limiting example, only the exhaust gases can be provided to the EGR manifold via the EGR conduit. In the non-limiting example, the IBH conduit is shut, closed, and/or controlled to "turned off" such that flow is not extracted from the compressor section and/or the IBH conduit does not provide extracted flow to the IBH manifold. In other non-limiting examples, the is EGR conduit is shut, closed, and/or controlled to "turned off" such that a portion of exhaust gases is not extracted from the exhaust line, and only extracted flow is provided to the IBH manifold, via the IBH conduit, during operation.

Further aspects of the present disclosure are provided by the subject matter of the following clauses:
An integration system for use with a gas turbine engine, the integration system including: an exhaust gas recirculation (EGR) system in flow communication with a gas turbine section of the gas turbine engine, the EGR system including: an EGR conduit fluidly coupled to an exhaust line of the gas turbine engine and fluidly coupled to an EGR manifold upstream from an inlet of a compressor section of the gas turbine engine, the EGR conduit oriented to provide a portion of exhaust gases discharged from the gas turbine section to the EGR manifold; and a flow restriction component in flow communication with the exhaust line of the gas turbine engine, the flow restriction component downstream from the EGR conduit of the EGR system, wherein the flow restriction component facilitates increasing a pressure of the exhaust gases discharged from the gas turbine section.

The integration system in accordance with the preceding clause, wherein the flow restriction component includes at least one of: an adjustable dampener, a reducer component fluidly coupled to the exhaust line, the reducer component including a converging diameter, and a heat recovery steam generator (HRSG) downstream and in flow communication with the exhaust line of the gas turbine engine.

The integration system in accordance with any of the preceding clauses, further including a controller communicatively coupled to the adjustable dampener, the controller selectively adjusting the adjustable dampener to facilitate changing the pressure of the exhaust gases generated by the gas turbine section.

The integration system in accordance with any of the preceding clauses, further including: an inlet bleed heat (IBH) system including an IBH conduit fluidly coupled to the compressor section of the gas turbine engine, the IBH system configured to channel, via the IBH conduit, flow extracted downstream from an outlet of the compressor section to an IBH manifold upstream from the inlet of the compressor section, wherein the controller is communicatively coupled to the IBH system to selectively adjust between: providing the exhaust gases generated by the gas turbine section to the EGR manifold via the EGR conduit; and providing the extracted flow from the outlet of the compressor section to the IBH manifold via the IBH conduit.

The integration system in accordance with any of the preceding clauses, wherein the controller is configured to selectively adjust between providing the exhaust gases and providing the extracted flow based on operational characteristics of the gas turbine engine.

The integration system in accordance with any of the preceding clauses, wherein the EGR manifold of the EGR system is upstream from the IBH manifold of the IBH system.

A power generation system including: a gas turbine engine including: a compressor section for compressing a working fluid; a combustor section downstream from and in flow communication with the compressor section; and a gas turbine section downstream from and in flow communication with the combustor section; and an integration system in flow communication with the gas turbine engine, the integration system including: an exhaust gas recirculation (EGR) system in flow communication with the gas turbine section of the gas turbine engine, the EGR system including: an EGR conduit fluidly coupled to an exhaust line of the gas turbine engine and fluidly coupled to an EGR manifold upstream from an inlet of the compressor section of the gas turbine engine, the EGR conduit oriented to provide a portion of exhaust gases discharged from the gas turbine section to the EGR manifold; and a flow restriction component in flow communication with the exhaust line of the gas turbine engine, the flow restriction component downstream from the EGR conduit of the EGR system, wherein the flow restriction component facilitates increasing a pressure of the exhaust gases discharged from the gas turbine section.

The power generation system in accordance with any of the preceding clauses, further including: a supplemental component downstream and in flow communication with the exhaust line of the gas turbine engine, wherein the flow restriction component is in flow communication with the supplemental component and is one of: upstream from the supplemental component, included within the supplemental component, or downstream from the supplemental component.

The power generation system in accordance with any of the preceding clauses, wherein the EGR conduit of the EGR system is upstream or downstream from the supplemental component.

The power generation system in accordance with any of the preceding clauses, wherein the supplemental component includes at least one of: a heat recovery steam generator (HRSG) downstream and in flow communication with the exhaust line of the gas turbine engine; and an exhaust stack downstream and in flow communication with the exhaust line of the gas turbine engine.

The power generation system in accordance with any of the preceding clauses, wherein the flow restriction component of the EGR system includes at least one of: an adjustable dampener, and a reducer component fluidly coupled to the exhaust line, the reducer component including a converging diameter.

The power generation system in accordance with any of the preceding clauses, wherein the integration system further includes a controller communicatively coupled to the adjustable dampener, the controller selectively adjusting the adjustable dampener to facilitate changing the pressure of the exhaust gases generated by the gas turbine section.

The power generation system in accordance with any of the preceding clauses, wherein the integration system further includes: an inlet bleed heat (IBH) system including an IBH conduit fluidly coupled to the compressor section of the gas turbine engine, the IBH system configured to channel, via the IBH conduit, flow extracted downstream from an outlet of the compressor section to an IBH manifold upstream from the inlet of the compressor section, wherein the controller of the integration system is communicatively coupled to the IBH system to selectively adjust between: providing the exhaust gases generated by the gas turbine section to the EGR manifold via the EGR conduit; and providing the extracted flow from the outlet of the compressor section to the IBH manifold via the IBH conduit.

The power generation system in accordance with any of the preceding clauses, wherein the controller of the integration system is configured to selectively adjust between providing the exhaust gases and providing the extracted flow based on operational characteristics of the gas turbine engine.

The power generation system in accordance with any of the preceding clauses, wherein the EGR manifold of the EGR system is positioned upstream from the IBH manifold of the IBH system.

A method including: adjusting a pressure of exhaust gases generated by a gas turbine section of a gas turbine engine using a flow restriction component, the flow restriction component in flow communication with an exhaust line of the gas turbine engine; and providing the exhaust gases generated by the gas turbine section of the gas turbine engine to an exhaust gas recirculation (EGR) manifold of an EGR system, via a EGR conduit, wherein the EGR conduit is fluidly coupled to the EGR manifold and the exhaust line of the gas turbine engine, upstream from the flow restriction component.

The method in accordance with any of the preceding clauses, wherein adjusting the pressure of the exhaust gases further includes: selectively adjusting a dampener forming the flow restriction component of the EGR system to facilitate changing the pressure of the exhaust gases generated by the gas turbine section.

The method in accordance with any of the preceding clauses, wherein selectively adjusting the dampener of the EGR system further includes one of: increasing a flow rate of the exhaust gases flowing through the exhaust line of the gas turbine engine; or decreasing the flow rate of the exhaust gases flowing through the exhaust line of the gas turbine engine.

The method in accordance with any of the preceding clauses, further including: providing an extracted flow from an outlet of a compressor section of the gas turbine engine to an inlet bleed heat (IBH) manifold, via an IBH conduit, of an IBH system.

The method in accordance with any of the preceding clauses, further including: selectively deciding, based on determined operational characteristics of the gas turbine engine, to: provide the extracted flow to the IBH manifold via the IBH conduit, or provide the exhaust gases generated by the gas turbine section of the gas turbine engine to the EGR manifold via the EGR conduit.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

In the exemplary embodiments described herein, an integrated efficiency (IE) system is provided for use with a gas turbine engine. The IE system includes an inlet bleed heat (IBH) system and an exhaust gas recirculation (EGR) system that may each be selectively used in combination, and/or isolation, to facilitate improving the efficiency of the power generation system, improving part load efficiency, improving the control of the release of emissions, and/or preventing icing and compressor surge. The combination of the EGR system and the IBH system, enables the controller to selectively control the use of the systems, thus enabling the IBH system to be significantly reduced in size and complexity, as the EGR system supplements the use of the IBH system. In some embodiments, the controller may selectively use the EGR system in isolation, such that the IBH system is in a standby mode and as such, the IBH does not need to draw compressed working fluid, resulting in an increase in the efficiency of the power generation system.

In the embodiments described herein, the IE system heats the inlet working fluid prior to entering the compressor inlet, thus improving the part load efficiency of a gas turbine, and/or the efficiency of the turbine at operating conditions other than its full load design point, while also preventing icing and/or compressor surge. In some embodiments, the IE system includes a controller that variably adjusts a mass flow rate, or a relative mass flow rate, of the EGR system including a flow restriction component to achieve a desired operating condition of the gas turbine engine. In some embodiments, the controller is communicatively coupled to one or more sensors, and may adjust the mass flow rates, in real-time or periodically, based on received sensor data and the targeted operating conditions. In some embodiments, the use of the flow restriction component in the EGR system creates a pressure differential and/or desired pressure (e.g., backpressure) for the exhaust gases to ensure that a portion of the exhaust gases generated by the power generation system can be flowed upstream of the compressor to improve operation of the system. Additionally, the creation of the pressure differential using the flow restriction component eliminates the need for additional components or systems (e.g., flow motive devices) to move the exhaust through the EGR system. This in turn simplifies the design and/or reduces the cost of the power generation system while still improving the part load efficiency of a gas turbine, and/or the efficiency of the turbine at operating conditions, as discussed herein.

This written description uses examples to disclose the embodiments of systems and methods, including the best mode, and also to enable any person skilled in the art to practice the systems and methods, including making and using any devices or systems and performing any incorporated methods. The patentable scope of the systems and methods is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

The foregoing drawings show some of the processing associated according to several embodiments of this disclosure. In this regard, each drawing or block within a flow diagram of the drawings represents a process associated with embodiments of the method described. It should also be noted that in some alternative implementations, the acts noted in the drawings or blocks may occur out of the order noted in the figure or, for example, may in fact be executed substantially concurrently or in the reverse order, depending upon the act involved. Also, one of ordinary skill in the art will recognize that additional blocks that describe the processing may be added.

## Claims

1. A power generation system comprising:
a gas turbine engine including:
a compressor section for compressing a working fluid;
a combustor section downstream from and in flow communication with the compressor section; and
a gas turbine section downstream from and in flow communication with the combustor section; and
an integration system in flow communication with the gas turbine engine, the integration system including:
an exhaust gas recirculation (EGR) system in flow communication with the gas turbine section of the gas turbine engine, the EGR system including:
an EGR conduit fluidly coupled to an exhaust line of the gas turbine engine and fluidly coupled to an EGR manifold upstream from an inlet of the compressor section of the gas turbine engine, the EGR conduit oriented to provide a portion of exhaust gases discharged from the gas turbine section to the EGR manifold; and
a flow restriction component in flow communication with the exhaust line of the gas turbine engine, the flow restriction component downstream from the EGR conduit of the EGR system,
wherein the flow restriction component facilitates increasing a pressure of the exhaust gases discharged from the gas turbine section.

2. The power generation system of claim 1, further comprising:
a supplemental component downstream and in flow communication with the exhaust line of the gas turbine engine,
wherein the flow restriction component is in flow communication with the supplemental component and is one of:
upstream from the supplemental component,
included within the supplemental component, or
downstream from the supplemental component.

3. The power generation system of claim 2, wherein the EGR conduit of the EGR system is upstream or downstream from the supplemental component.

4. The power generation system of claim 2, wherein the supplemental component includes at least one of:
a heat recovery steam generator (HRSG) downstream and in flow communication with the exhaust line of the gas turbine engine; and
an exhaust stack downstream and in flow communication with the exhaust line of the gas turbine engine.

5. The power generation system of claim 1, wherein the flow restriction component of the EGR system includes at least one of:
an adjustable dampener, and
a reducer component fluidly coupled to the exhaust line, the reducer component including a converging diameter.

6. The power generation system of claim 5, wherein the integration system further includes a controller communicatively coupled to the adjustable dampener, the controller selectively adjusting the adjustable dampener to facilitate changing the pressure of the exhaust gases generated by the gas turbine section.

7. The power generation system of claim 6, wherein the integration system further includes:
an inlet bleed heat (IBH) system including an IBH conduit fluidly coupled to the compressor section of the gas turbine engine, the IBH system configured to channel, via the IBH conduit, flow extracted downstream from an outlet of the compressor section to an IBH manifold upstream from the inlet of the compressor section,
wherein the controller of the integration system is communicatively coupled to the IBH system to selectively adjust between:
providing the exhaust gases generated by the gas turbine section to the EGR manifold via the EGR conduit; and
providing the extracted flow from the outlet of the compressor section to the IBH manifold via the IBH conduit.

8. The power generation system of claim 7, wherein the controller of the integration system is configured to selectively adjust between providing the exhaust gases and providing the extracted flow based on operational characteristics of the gas turbine engine.

9. The power generation system of claim 7, wherein the EGR manifold of the EGR system is positioned upstream from the IBH manifold of the IBH system.

10. A method comprising:
adjusting a pressure of exhaust gases generated by a gas turbine section of a gas turbine engine using a flow restriction component, the flow restriction component in flow communication with an exhaust line of the gas turbine engine; and
providing the exhaust gases generated by the gas turbine section of the gas turbine engine to an exhaust gas recirculation (EGR) manifold of an EGR system, via a EGR conduit,
wherein the EGR conduit is fluidly coupled to the EGR manifold and the exhaust line of the gas turbine engine, upstream from the flow restriction component.

11. The method of claim 10, wherein adjusting the pressure of the exhaust gases further includes:
selectively adjusting a dampener forming the flow restriction component of the EGR system to facilitate changing the pressure of the exhaust gases generated by the gas turbine section.

12. The method of claim 11, wherein selectively adjusting the dampener of the EGR system further includes one of:
increasing a flow rate of the exhaust gases flowing through the exhaust line of the gas turbine engine; or
decreasing the flow rate of the exhaust gases flowing through the exhaust line of the gas turbine engine.

13. The method of claim 10, further comprising:
providing an extracted flow from an outlet of a compressor section of the gas turbine engine to an inlet bleed heat (IBH) manifold, via an IBH conduit, of an IBH system.

14. The method of claim 13, further comprising:
selectively deciding, based on determined operational characteristics of the gas turbine engine, to:
provide the extracted flow to the IBH manifold via the IBH conduit, or
provide the exhaust gases generated by the gas turbine section of the gas turbine engine to the EGR manifold via the EGR conduit.
